Europäisches Patentamt

European Patent Office

Office européen des brevets

(19)

(11) **EP 1 330 112 A1**

(12) **EUROPEAN PATENT APPLICATION**
published in accordance with Art. 158(3) EPC

(43) Date of publication:
**23.07.2003 Bulletin 2003/30**

(51) Int Cl.⁷: **H04N 1/405**, H04N 1/23,
B41J 3/00

(21) Application number: **01961259.7**

(22) Date of filing: **31.08.2001**

(86) International application number:
**PCT/JP01/07544**

(87) International publication number:
**WO 02/019694 (07.03.2002 Gazette 2002/10)**

(84) Designated Contracting States:
**AT BE CH CY DE DK ES FI FR GB GR IE IT LI LU
MC NL PT SE TR**

(30) Priority: **31.08.2000 JP 2000264709**

(71) Applicant: **Ricoh Company, Ltd.**
**Tokyo 143-8555 (JP)**

(72) Inventor: **Sasaki, Eiichi,**
**c/o Ricoh Company, Limited**
**Tokyo 143-8555 (JP)**

(74) Representative: **Schwabe - Sandmair - Marx**
**Stuntzstrasse 16**
**81677 München (DE)**

(54) **IMAGE FORMING DEVICE**

(57)    A determination section (200) determines whether there is a peripheral dot located at an arbitrary distance from a target dot at least in a main scanning direction and in a subscanning direction in a dot image to detect whether space dots surround the target dot. An adder (400) adds an arbitrary amount of additional value m to target dot image data d corresponding to the target dot based on a result of detection by the determination section (200).

FIG.3

EP 1 330 112 A1

**EP 1 330 112 A1**

**Description**

TECHNICAL FIELD

The present invention relates to an image formation device that can achieve optimal dot reproduction and improve reproducibility of highlights.

BACKGROUND ART

Conventionally, to reproduce halftones corresponding to image information of vector type, an image formation device converts the image information into image data (bitmap data), reads out the image data at a certain timing to subject the image data to $\gamma$-correction (density correction) dot by dot, and then subjects the $\gamma$-corrected image data to pseudo halftone processing such as dither processing.

Japanese Patent Application Laid-Open No. 3-80768 exemplifies an image formation device that performs density correction on image data using a multilevel dither method to obtain a halftone image in image processing. This type of image formation device comprises a first correcting unit that corrects a density characteristic of multivalue image data based on a dither processing, a dither-processing unit that performs a multilevel dither processing on the multivalue image data corrected by the first correcting unit, and a second correcting unit that corrects a density characteristic of the multilevel dither data obtained by the dither-processing unit based on a printer output characteristic. Thus, the image formation device can easily respond to various combinations of printer output characteristics. In addition, the image formation device performs the $\gamma$-correction based on a single $\gamma$-characteristic.

However, in the conventional art, it is not possible to respond to a variety of pseudo halftone processing because the $\gamma$-correction is performed based on the single $\gamma$-characteristic. Therefore, in the conventional art, it is not possible to reproduce halftones of image information with fidelity, resulting in a difficulty to achieve optimal dot reproduction and a lower reproducibility of highlights.

The present invention has been achieved in consideration of the above and accordingly has an object to provide an image formation device that can achieve optimal dot reproduction and improve reproducibility of a highlight.

DISCLOSURE OF THE INVENTION

The image formation device according to the present invention for forming a dot image on a recording medium based on image data, comprises: a peripheral dot detecting unit that detects whether there is a peripheral dot located at an arbitrary distance from a target dot at least in a main scanning direction and in a subscanning direction in the dot image; a space dot detecting unit that detects whether space dots surround the target dot based on a result of detection by the peripheral dot detecting unit; and a data amount control unit that increases data corresponding to the target dot based on a result of detection by the space dot detecting unit.

According to the image formation device, the data corresponding to the target dot is increased based on the result of detection by the peripheral dot detecting unit and the result of detection by the space dot detecting unit. Therefore, it is possible to achieve optimal dot reproduction based on the surrounding situation around the target dot and improve reproducibility of a highlight.

In the image formation device according to the present invention, the data amount control unit adds an arbitrary amount of additional data to the data corresponding to the target dot.

According to the image formation device, the arbitrary amount of additional data is added to the data corresponding to the target dot. Therefore, it is possible to achieve further optimal dot reproduction because the additional data can be varied.

In the image formation device according to the present invention, the peripheral dot detecting unit detects whether there is a peripheral dot located at a minimal distance from the target dot.

According to the image formation device, the presence or absence of a peripheral dot located at the minimal distance from the target dot is detected and the data corresponding to the target dot is increased based on the detected result. Therefore, it is possible to achieve optimal dot reproduction based on the surrounding situation around the target dot and improve reproducibility of a highlight.

The image formation device according to the present invention further comprises a phase control unit that shifts a phase of the target dot based on an empty state of the peripheral dot in the main scanning direction and an empty state of the peripheral dot in the subscanning direction.

According to the image formation device, the phase of the target dot is shifted based on empty states of the peripheral dots in the main and subscanning directions. Therefore, it is possible to achieve optimal dot reproduction in consideration of the empty states of the peripheral dots.

The image formation device according to the present invention further comprises a both-adjacent-dots detecting unit that detects whether there are dots adjacent to both sides of the target dot at least in the main scanning direction; and a phase control unit that, if either of the dots is determined a space dot based on a result of detection by the both-adjacent-dots detecting unit, shifts a phase of the target dot to the opposite side to the space dot when the target dot is formed on the recording medium.

According to the image formation device, the phase of the target dot is shifted to the opposite side to the space dot. Therefore, it is possible to achieve further optimal dot reproduction because the target dot can be emphasized while remaining the space dot.

The image formation device according to the present invention for forming a dot image on a recording medium based on image data, comprises: a number-of-areas detecting unit that detects a number of detection areas each in which presence of at least one peripheral dot is detected, among a plurality of detection areas around a target dot in the dot image, each of the plurality of detection areas containing a plurality of peripheral dots; and a converting unit that subjects the target dot to level conversion based on a result of detection by the number-of-areas detecting unit.

According to the image formation device, the target dot is subjected to level conversion based on the result of detection by the number-of-areas detecting unit. Therefore, it is possible to achieve optimal dot reproduction even for a high-resolution dot based on the surrounding situation around the target dot.

In the image formation device according to the present invention, one of the detection areas is an area spreading in a main scanning direction and a subscanning direction.

According to the image formation device, the detection area is spread in the main and subscanning directions. Therefore, it is possible to allow influence of the surrounding (wide range) over the target dot to be reflected to the data conversion of the target dot.

In the image formation device according to the present invention, the detection areas are distributed among areas each spreading in the main and subscanning directions.

According to the image formation device, the detection areas are distributed among areas each spreading in the main and subscanning directions. Therefore, it is possible to allow a degree of the influence of the peripheral dot over the target dot to be reflected to the data conversion of the target dot.

The image formation device according to the present invention further comprises a storage unit that stores a conversion table indicating a correlation between the result of detection and degrees of the level conversion. The converting unit switches between the degrees of the level conversion based on the result of detection by referring to the conversion table.

According to the image formation device, the conversion table is employed to switch the degree of the level conversion based on the detected result. Therefore, it is possible to perform optimal data conversion automatically.

The image formation device according to the present invention for forming a dot image on a recording medium based on image data, comprises: a detecting unit that detects whether there is a set of peripheral dots in detection areas around a target dot in the dot image, each of the detection areas containing a plurality of peripheral dots as a set; and a converting unit that subjects the target dot to level conversion based on a result of detection by the detecting unit.

According to the image formation device, the target dot is subjected to level conversion based on the result of detection by the detecting unit. Therefore, it is possible to achieve optimal dot reproduction even for a high-resolution dot based on the surrounding situation around the target dot.

In the image formation device according to the present invention, the set of peripheral dots has the same resolution in main and subscanning directions.

According to the image formation device, the set of peripheral dots are designed to have the same resolution in the main and subscanning directions. Therefore, it is possible to achieve optimal dot reproduction in the main and subscanning directions based on the surrounding situation around the target dot.

In the image formation device according to the present invention, the target dot includes a plurality of dots as a set and has the same resolution in main and subscanning directions.

According to the image formation device, the target dot is designed to have the same resolution in the main and subscanning directions. Therefore, it is possible to achieve optimal dot reproduction in the main and subscanning directions based on the surrounding situation around the target dot.

The image formation device according to the present invention for forming a dot image on a recording medium based on image data, comprises: a detecting unit that detects each state of peripheral dots in an adjacent area adjacent to a target dot and in a plurality of areas adjacent to the adjacent area in the dot image; and a converting unit that subjects the target dot to level conversion based on a result of detection by the detecting unit.

According to the image formation device, the target dot is subjected to level conversion based on the state of the peripheral dots in the adjacent area and the plural areas with respect to the target dot. Therefore, it is possible to achieve optimal dot reproduction even for a high-resolution dot based on the surrounding situation.

In the image formation device according to the present invention, the detecting unit detects a level state of the peripheral dot in the adjacent area, and the converting unit selects one of level conversion tables for level conversion based on the level state.

According to the image formation device, one of the level conversion tables is selected based on the level state of the peripheral dot in the adjacent area. Therefore, it is possible to achieve optimal dot reproduction corresponding to a halftone processing.

In the image formation device according to the present invention, the detecting unit detects a number of peripheral dots that are present in the adjacent area, and the converting, unit executes separately at least a level conversion for the number that is zero from a level conversion for the number that is any other than zero.

According to the image formation device, the level conversion when the number of peripheral dots that are present is zero is executed separately from the level conversion for the number other than zero. Therefore, it is possible to reduce a memory area required for management as compared to that for integrally managing both cases.

In the image formation device according to the present invention, the converting unit generates an arbitrary dot based on a result of detection by the detecting unit even if the target dot has a level of zero.

According to the image formation device, an arbitrary dot is generated based on the result of detection by the detecting unit even if the target dot has a level of zero. Therefore, it is possible to improve dropout of a single dot and failure of reproducibility.

In the image formation device according to the present invention, there is a case where the dot image is to be written into the medium with multiple beams. The image formation device further comprises a layout unit that lays out positions of the target dot in a subscanning direction corresponding to the respective multiple beams on positions corresponding to an integral multiple of a number of the multiple beams.

According to the image formation device, when the dot image is to be written into the medium with multiple beams, positions of the target dot in the subscanning direction corresponding to the respective multiple beams are laid out on positions corresponding to the integral multiple of the number of the multiple beams. Therefore, it is possible to minimize the use of line buffers because the target dot can be converted per plural lines.

BRIEF DESCRIPTION OF THE DRAWINGS

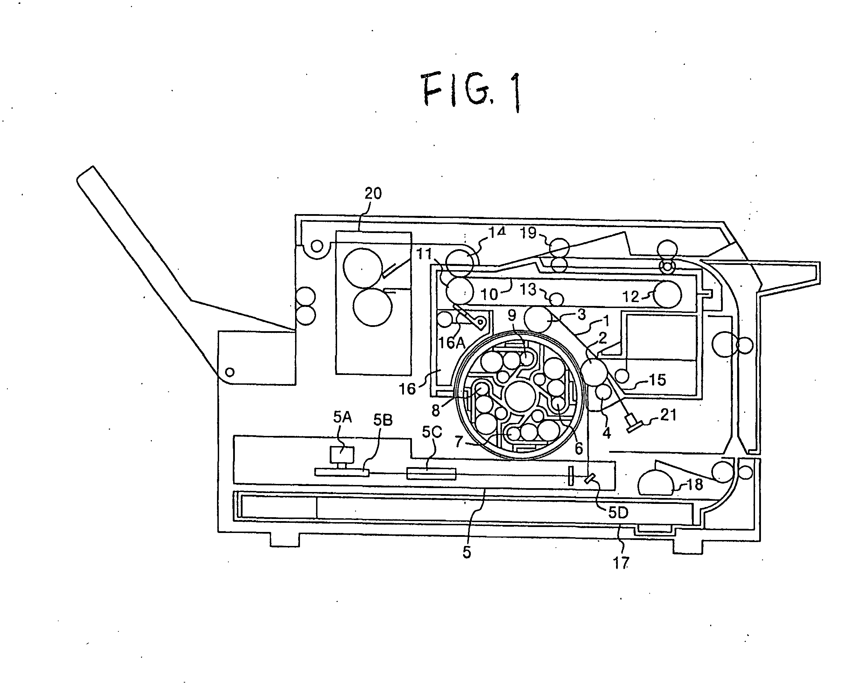

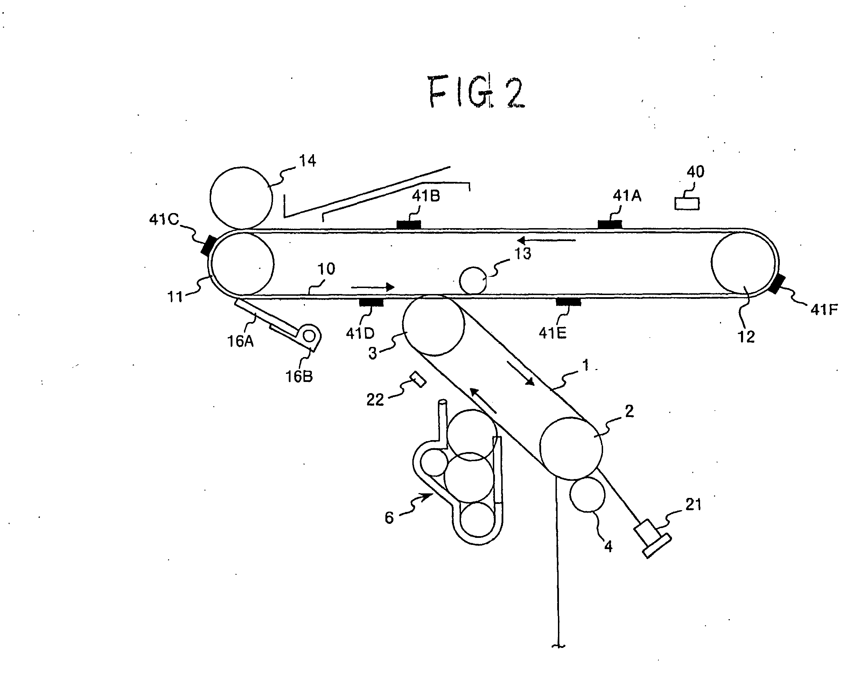

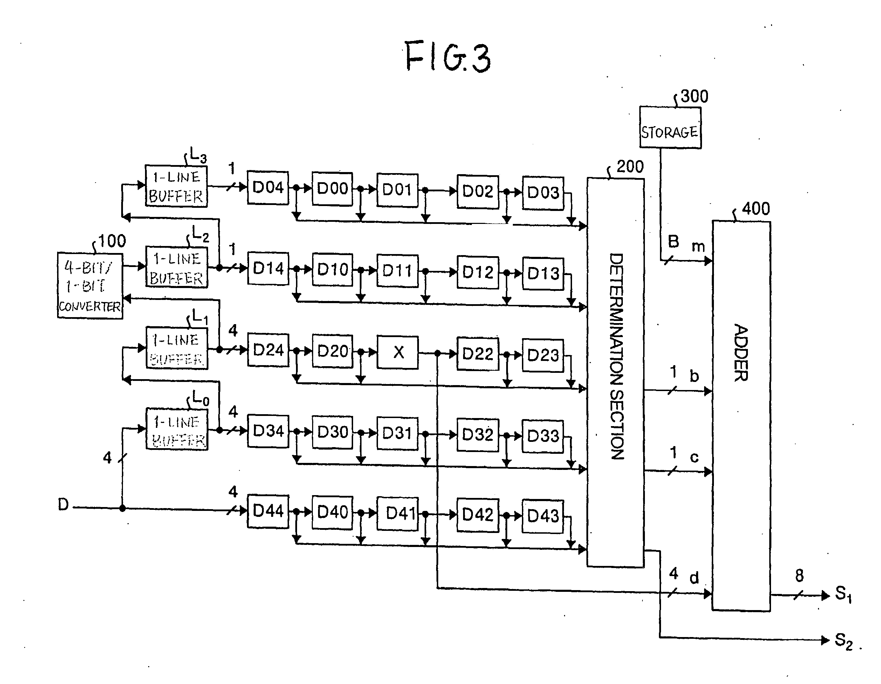

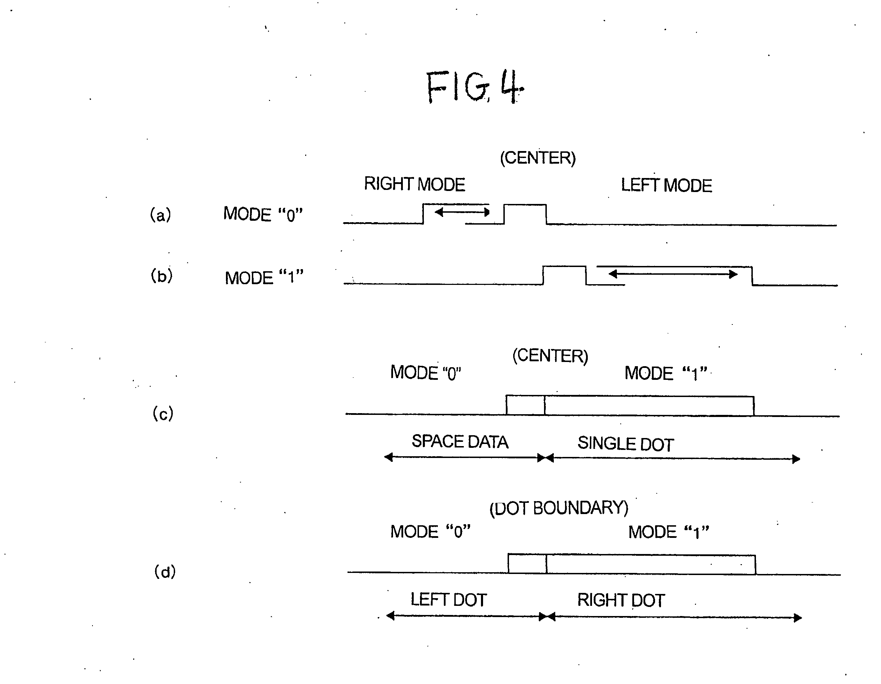

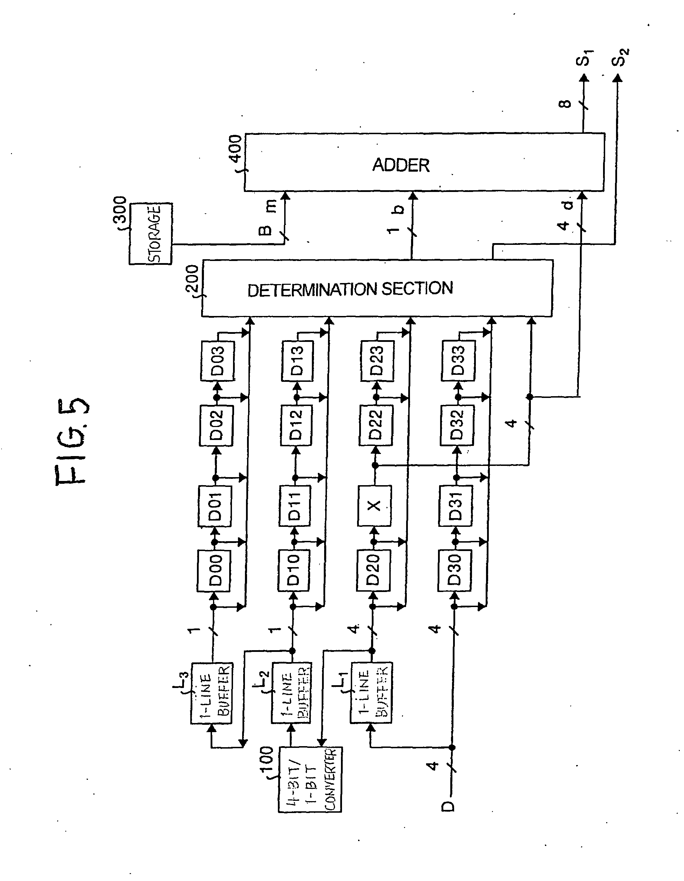

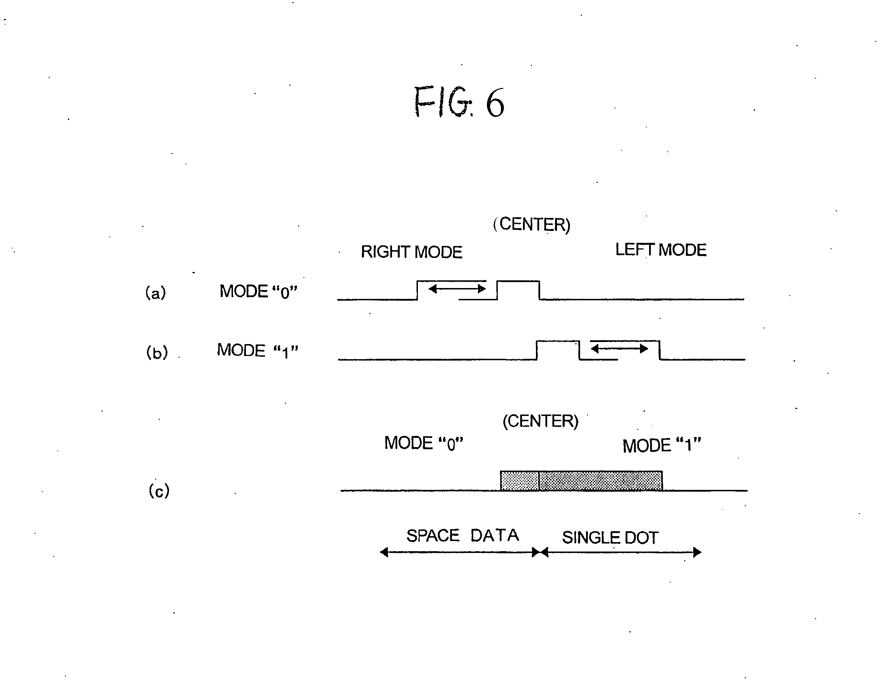

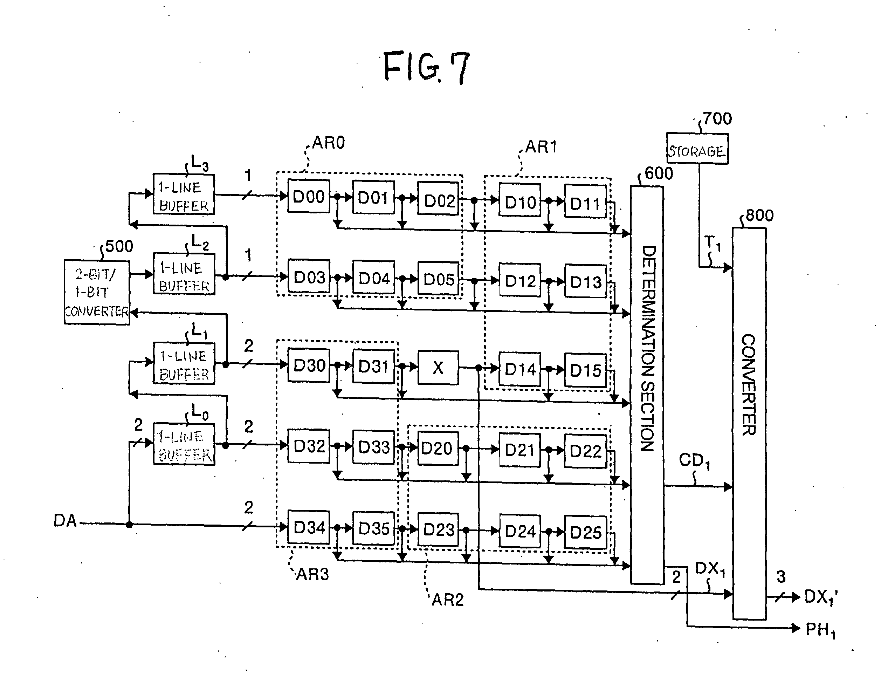

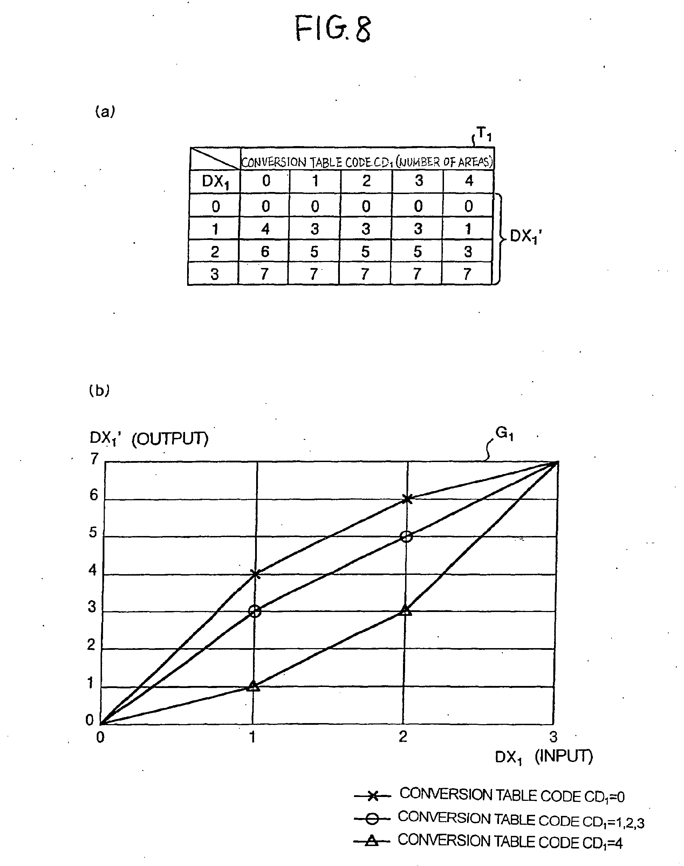

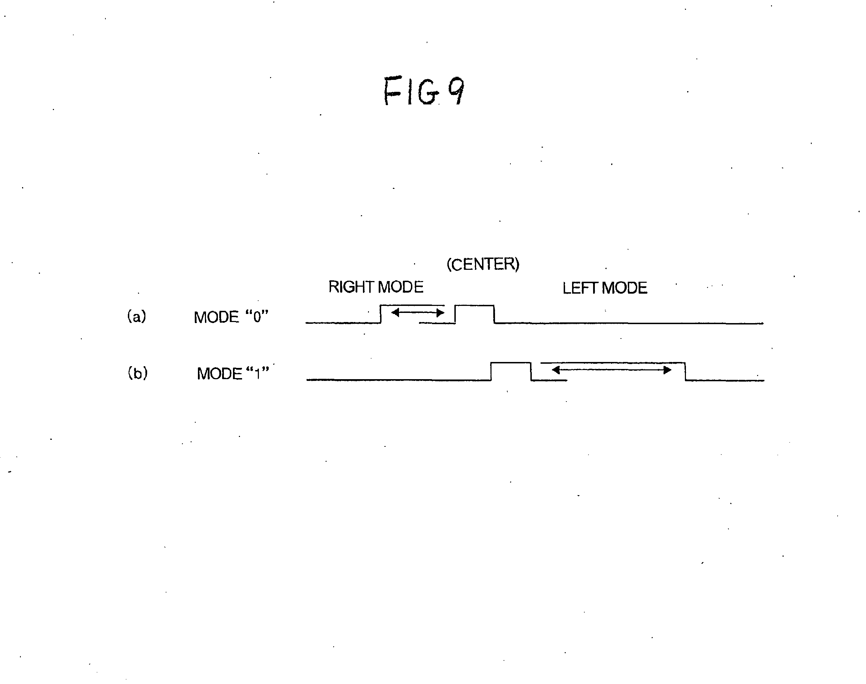

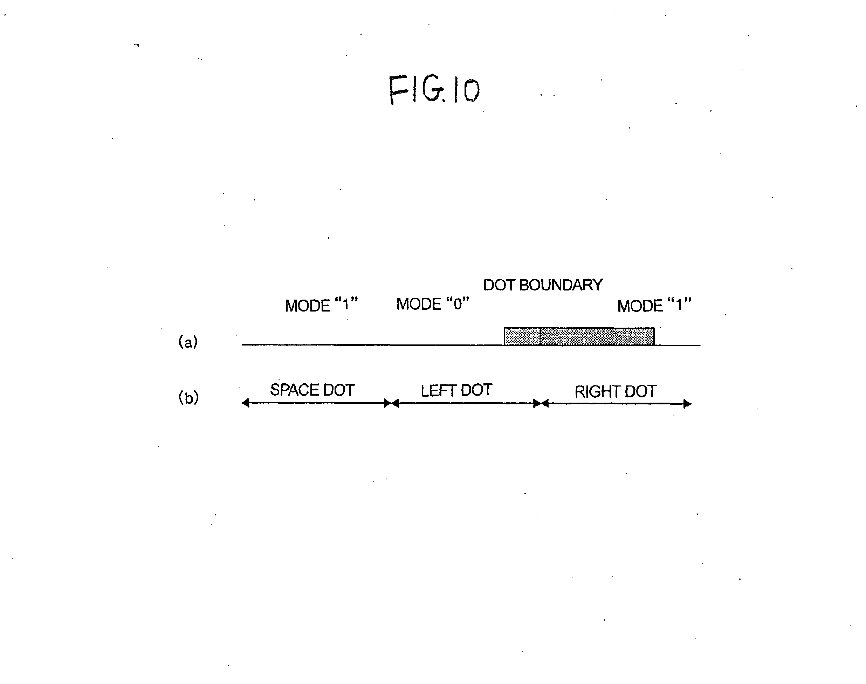

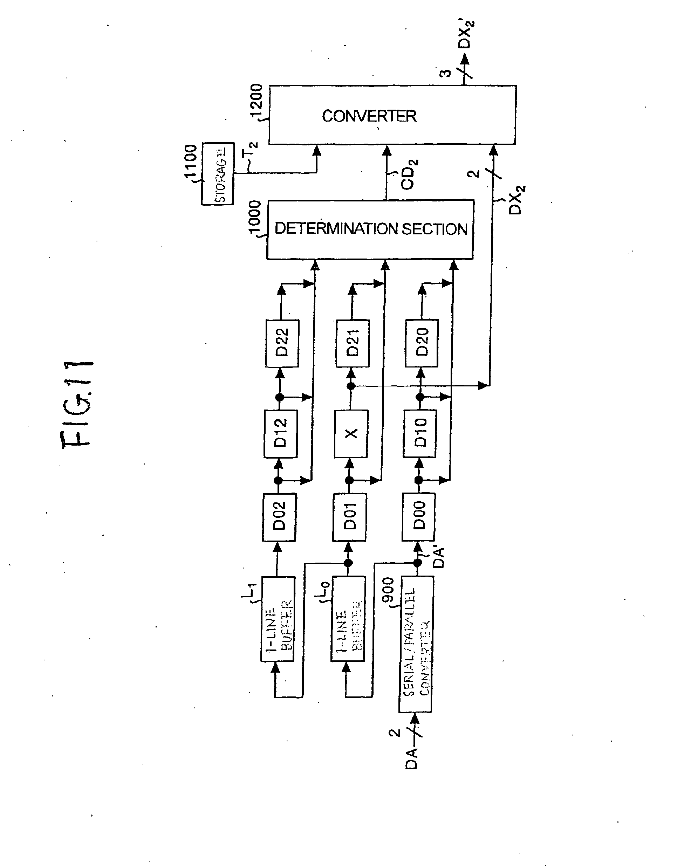

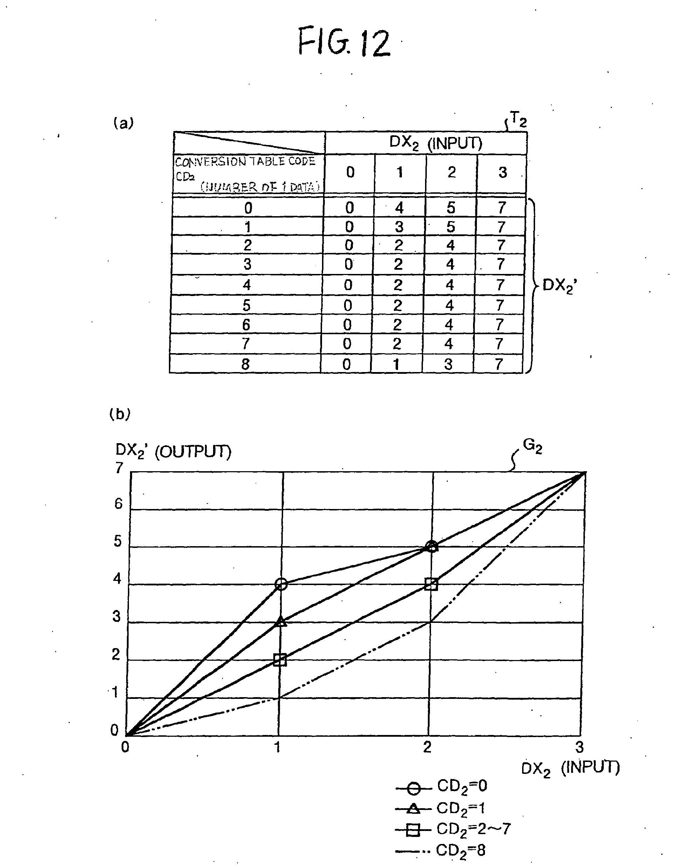

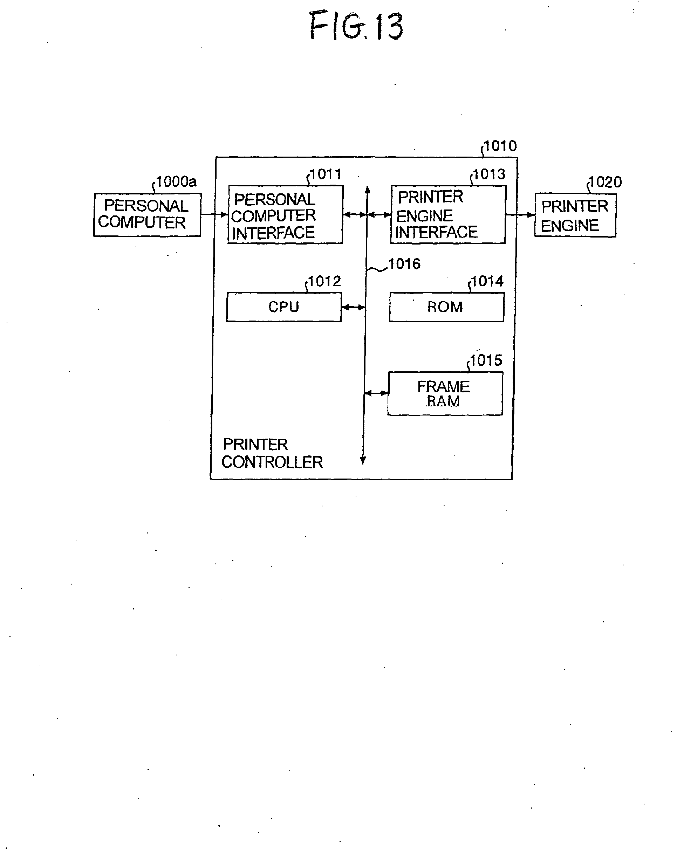

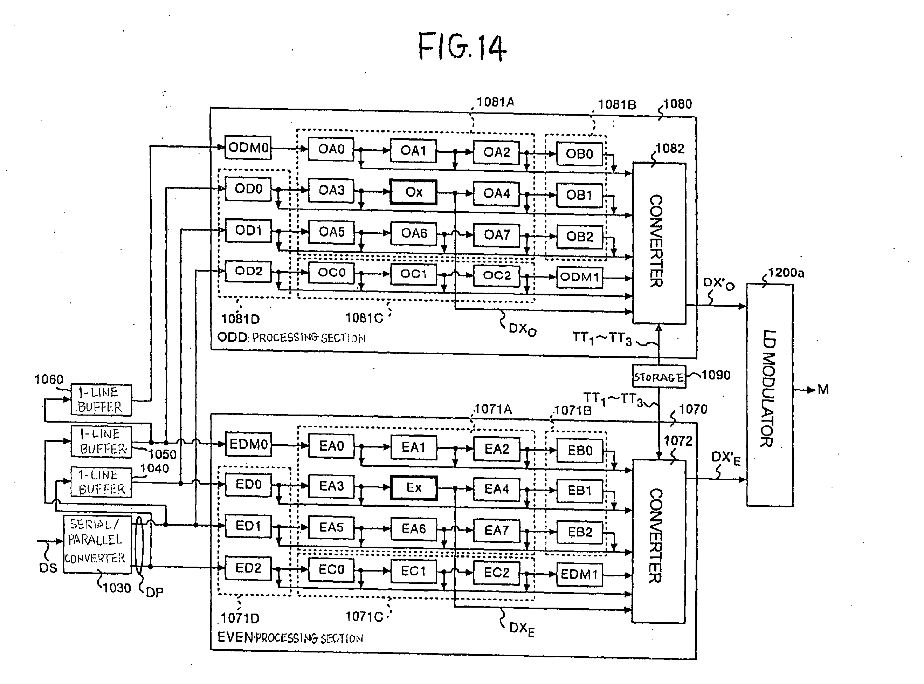

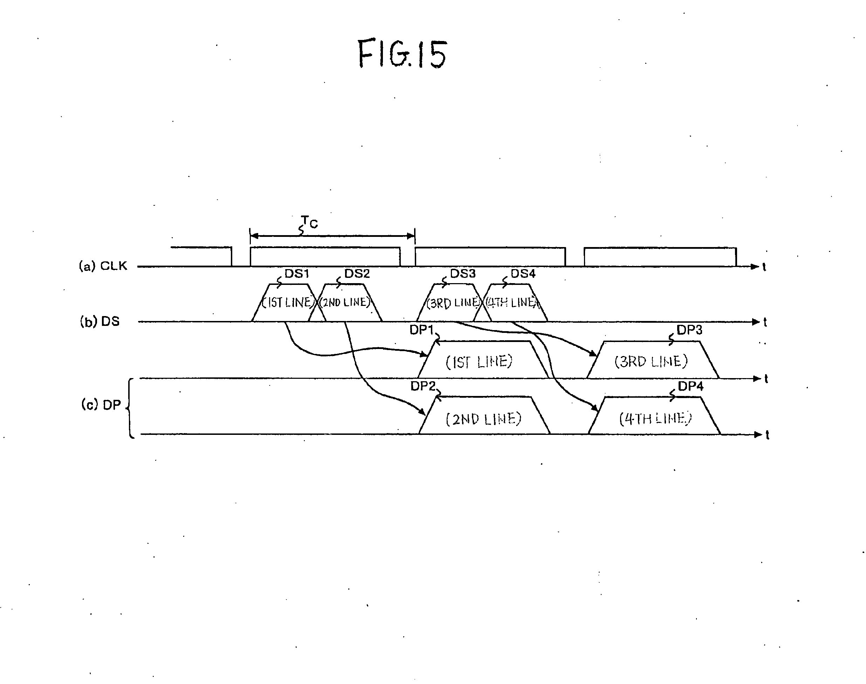

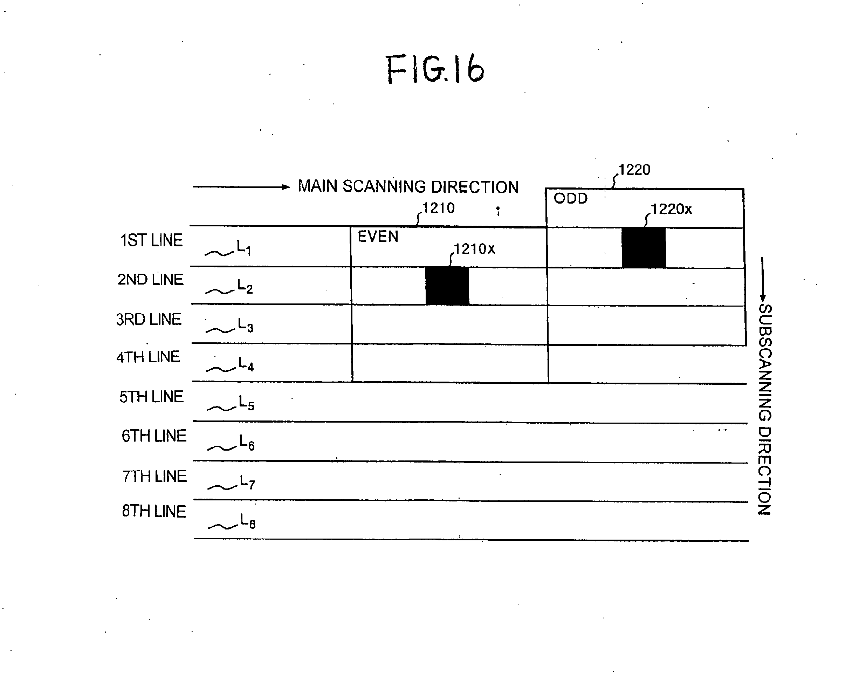

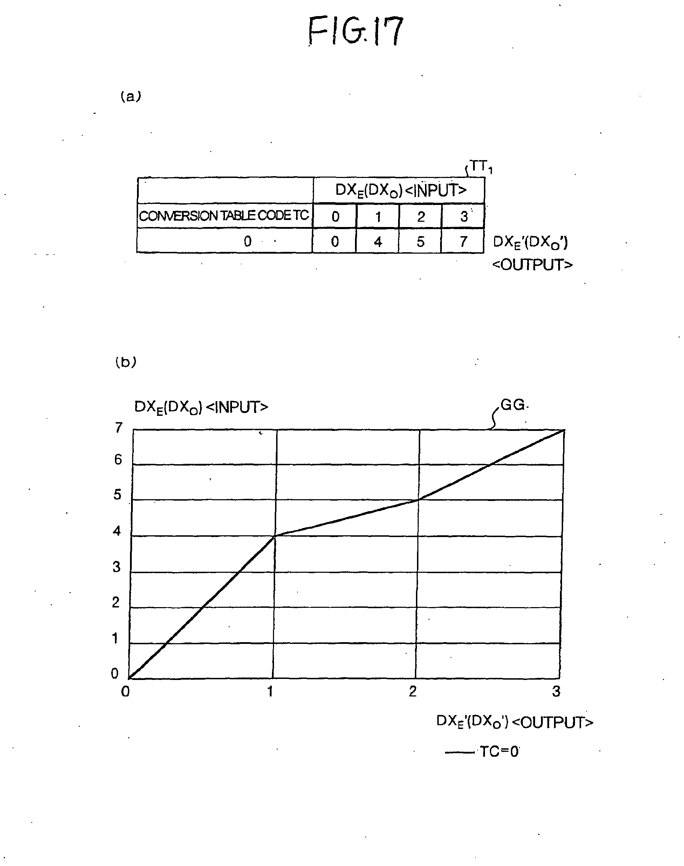

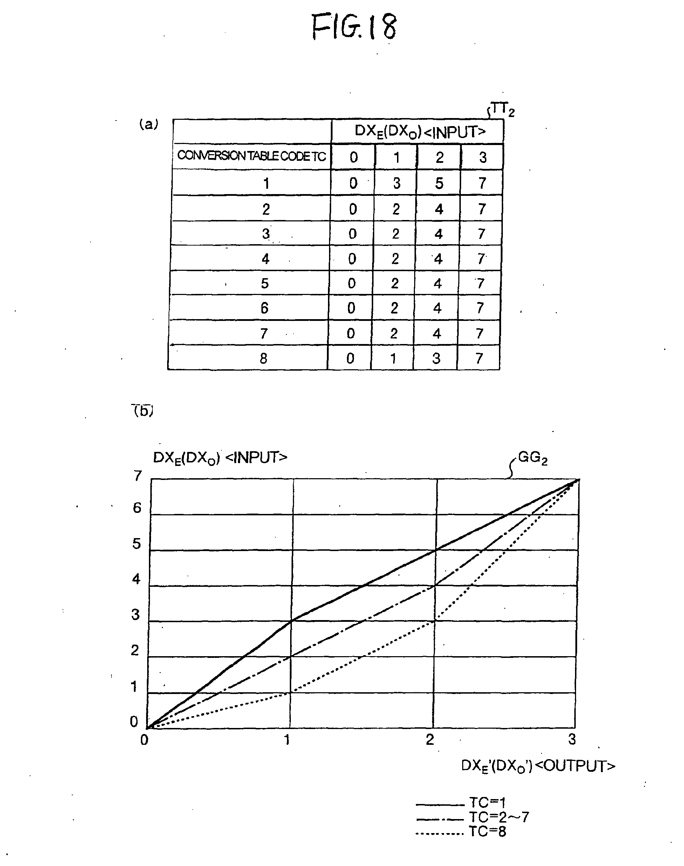

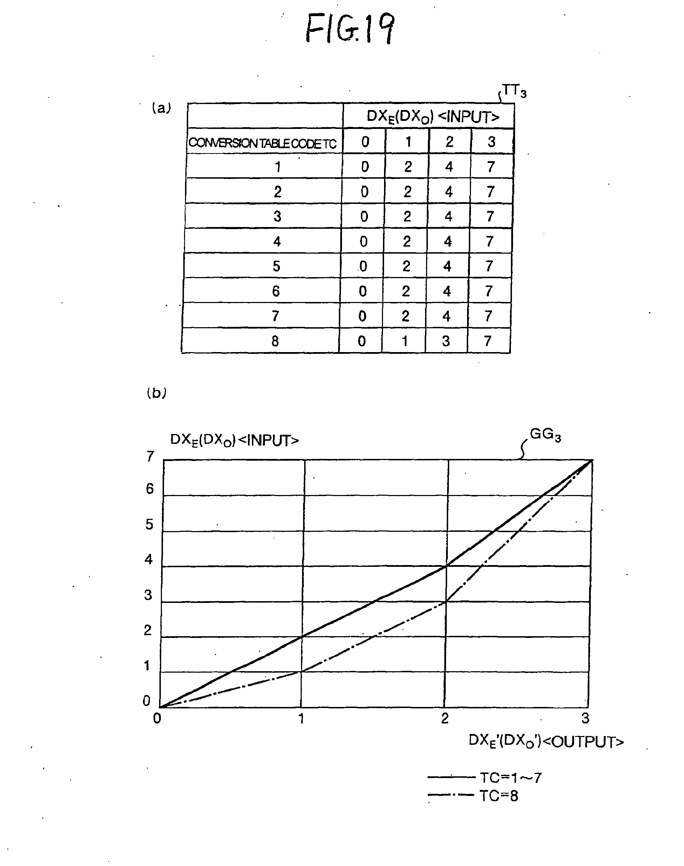

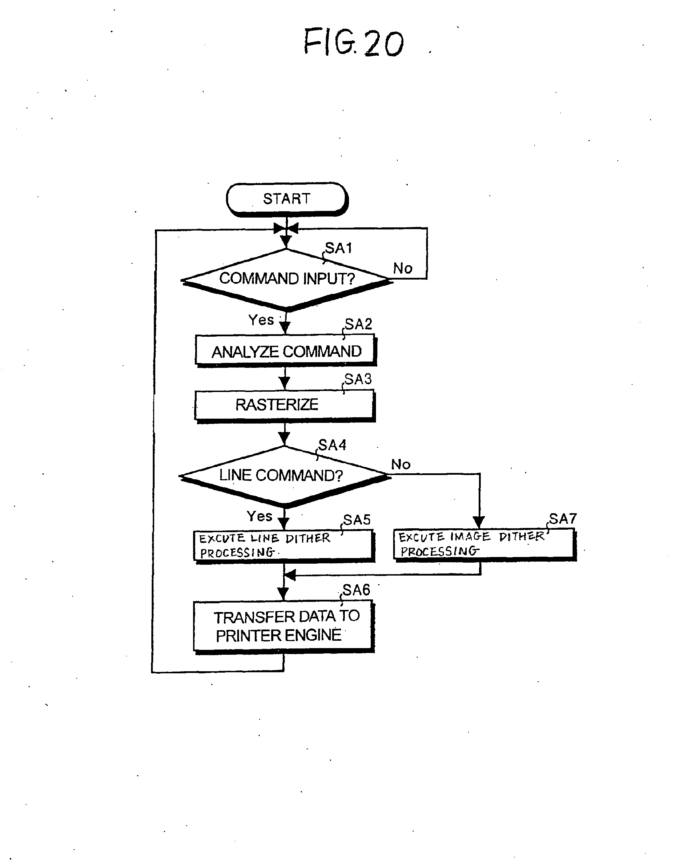

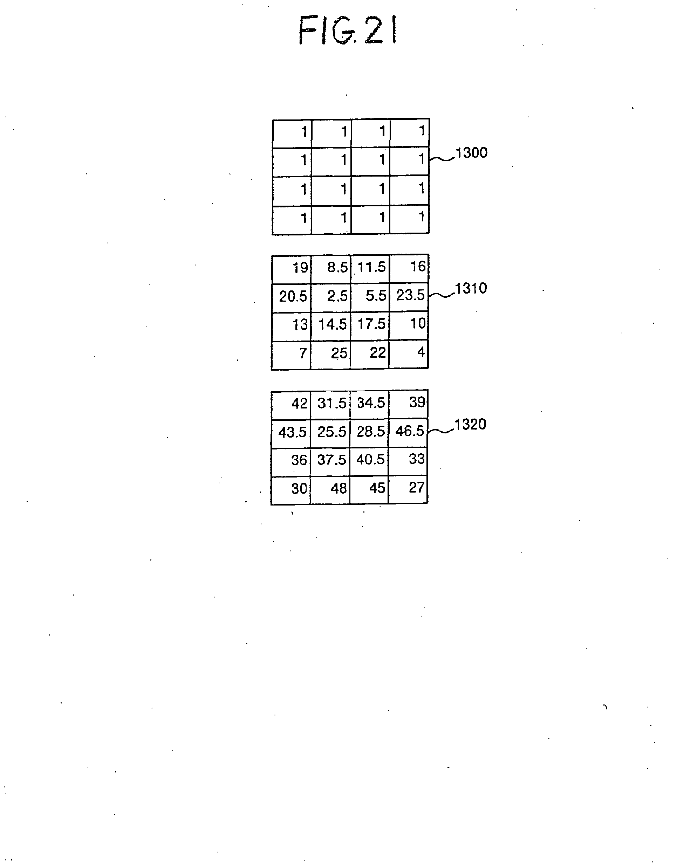

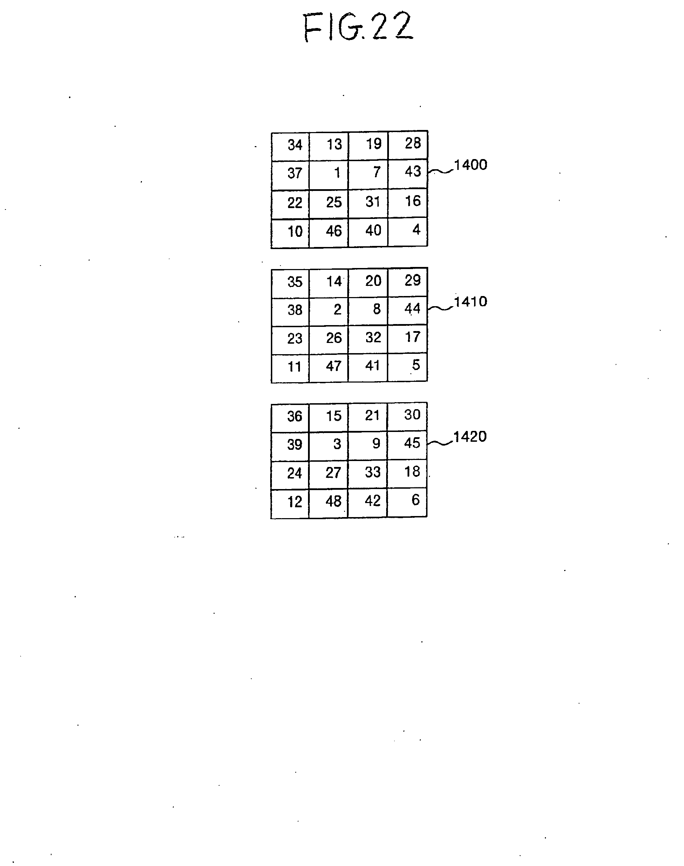

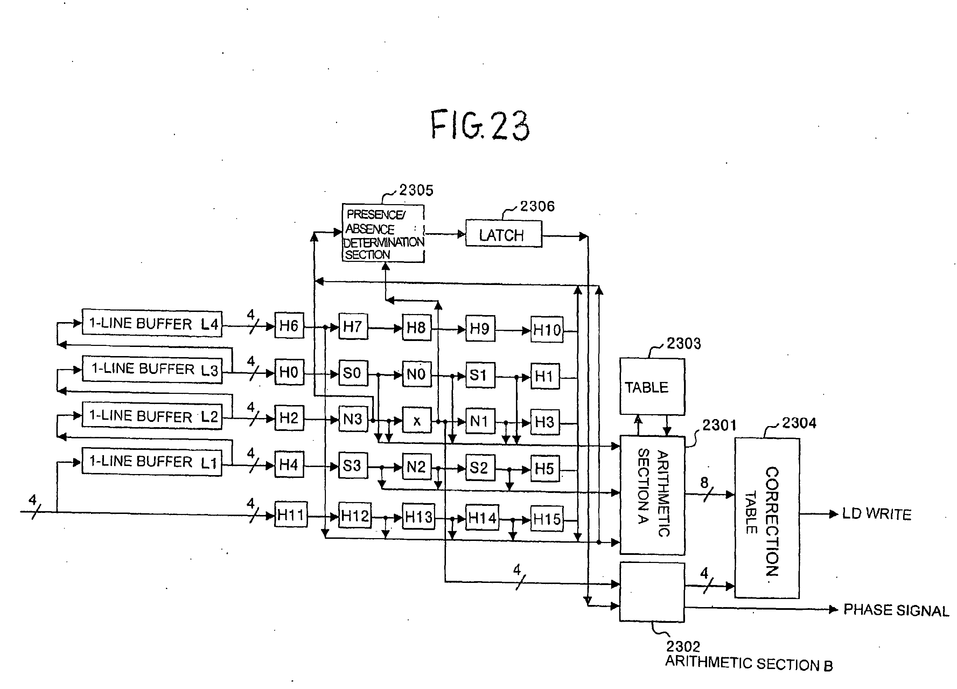

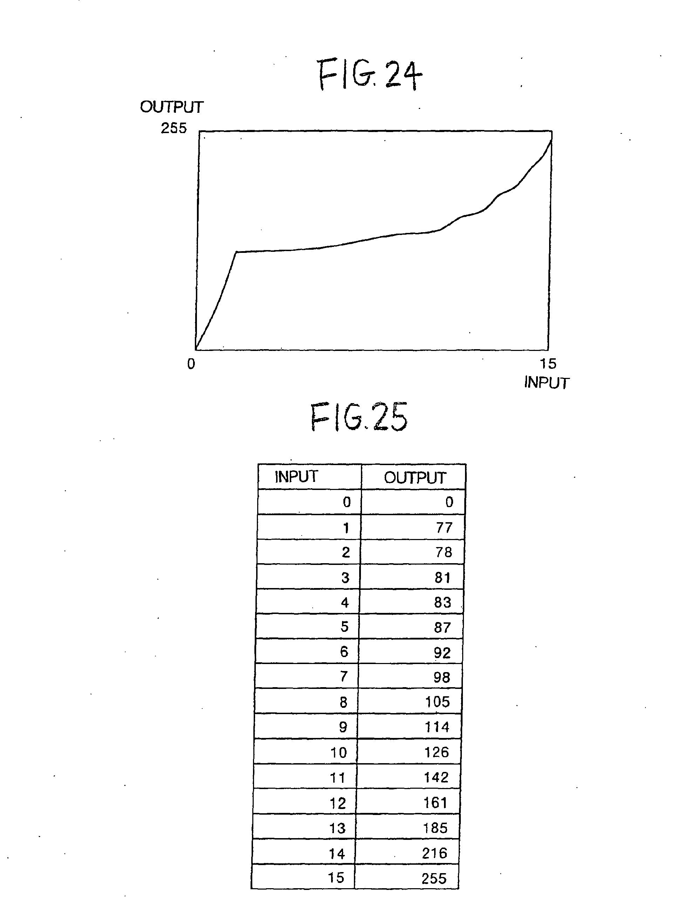

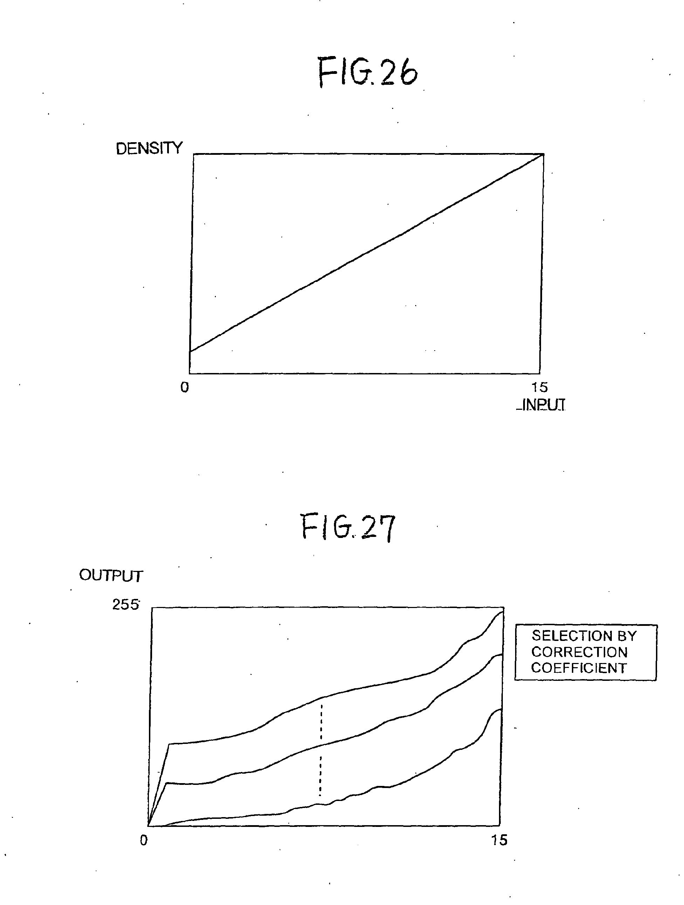

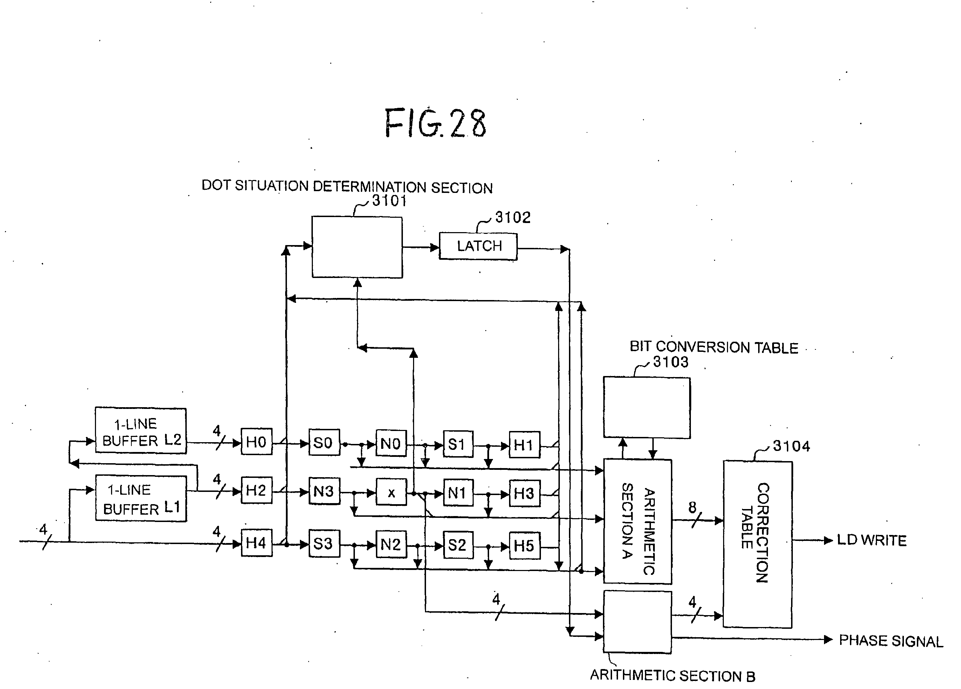

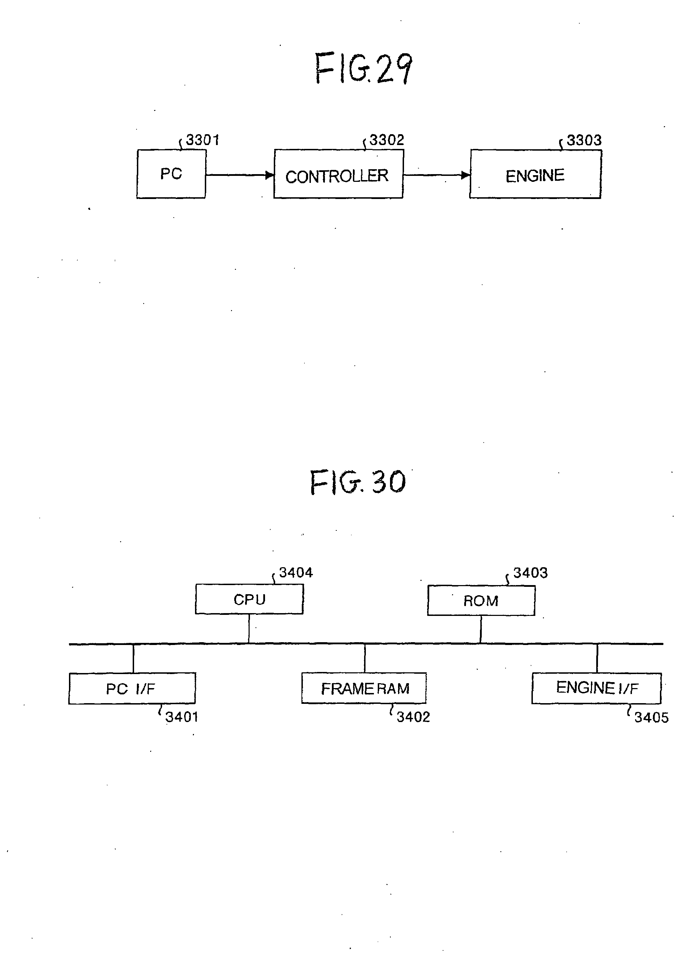

Fig. 1 shows a mechanical structure of a color image formation device according to a first embodiment of the present invention; Fig. 2 is a partially enlarged view of the color image formation device shown in Fig. 1; Fig. 3 is a block diagram that shows the configuration of a processing section applied to the color image formation device shown in Fig. 1; Fig. 4 shows diagrams of operation of the first embodiment; Fig. 5 is a block diagram that shows the configuration of a processing section applied to a color image formation device according to a second embodiment of the present invention; Fig. 6 shows diagrams of operation of the second embodiment; Fig. 7 is a block diagram that shows a configuration of a processing section applied to a color image formation device according to a third embodiment of the present invention; Fig. 8 shows a conversion table $T_1$ and an associated graph $G_1$ applied to the color image formation device according to the third embodiment; Fig. 9 shows diagrams of operation of the third embodiment; Fig. 10 shows diagrams of operation of the third embodiment; Fig. 11 is a block diagram that shows a configuration of a processing section applied to a color image formation device according to a fourth embodiment of the present invention; Fig. 12 shows a conversion table $T_2$ and an associated graph $G_2$ applied to the color image formation device according to the fourth embodiment; Fig. 13 is a block diagram that shows a configuration of a printer controller 1010 applied to a color image formation device according to a fifth embodiment of the present invention; Fig. 14 is a block diagram that shows a configuration of a processing section applied to the color image formation device according to the fifth embodiment; Fig. 15 shows diagrams of operation of the fifth embodiment; Fig. 16 is a schematic diagram that shows a positional relation in the subscanning direction between an EVEN processing section 1070 and an ODD processing section 1080 shown in Fig. 14; Fig. 17 shows a conversion table $TT_1$ and an associated graph $GG_1$ applied to the color image formation device according to the fifth embodiment; Fig. 18 shows a conversion table $TT_2$ and an associated graph $GG_2$ applied to the color image formation device according to the fifth embodiment; Fig. 19 shows a conversion table $TT_3$ and an associated graph $GG_3$ applied to the color image formation device according to the fifth embodiment; Fig. 20 is a flowchart that explains operation of the fifth embodiment; Fig. 21 shows a first dither threshold matrix for thin lines 1300, a second dither threshold matrix for thin lines 1310, and a third dither threshold matrix for thin lines 1320 applied to the color image formation device according to the fifth embodiment; Fig. 22 shows a first dither threshold matrix for images 1400, a second dither threshold matrix for images 1410, and a third dither threshold matrix for images 1420 applied to the color image formation device according to the fifth embodiment; Fig. 23 is a block diagram that shows an embodiment of the image formation device according to the present invention; Fig. 24 is an explanatory view that shows a bit conversion table shown in Fig. 23; Fig. 25 is an explanatory view that details the bit conversion table shown in Fig. 24; Fig. 26 is an explanatory view that shows a conversion characteristic of the bit conversion table shown in Fig. 24 and Fig. 25; Fig. 27 is an explanatory view that shows a correction table shown in Fig. 24; Fig. 28 is a block diagram that shows an embodiment of the image formation device according to the present invention; Fig. 29 is a block diagram that shows a system configuration of the image formation device according to the present invention;

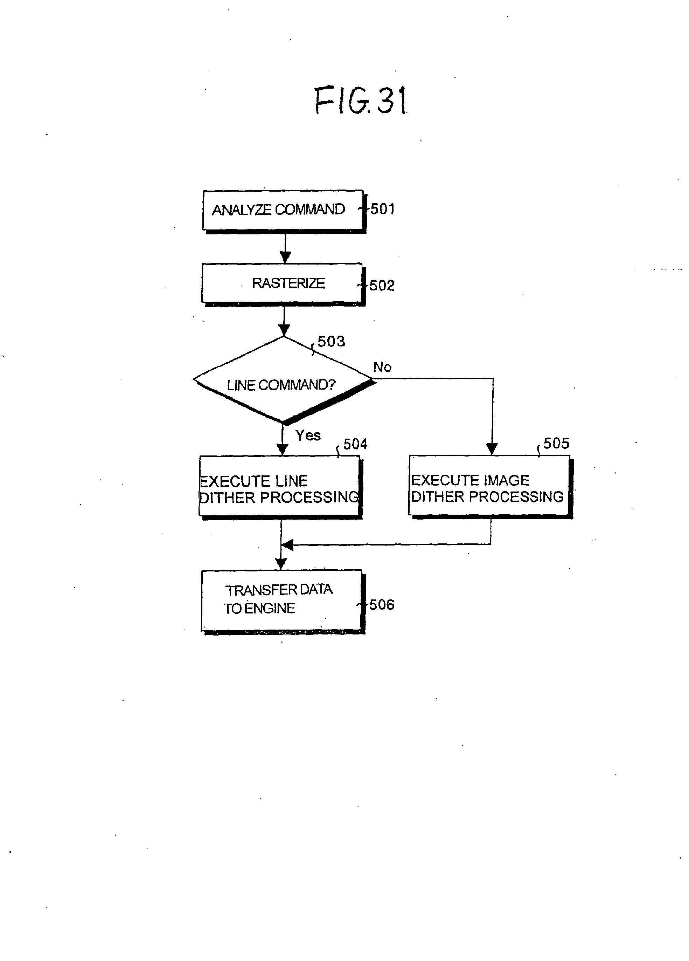

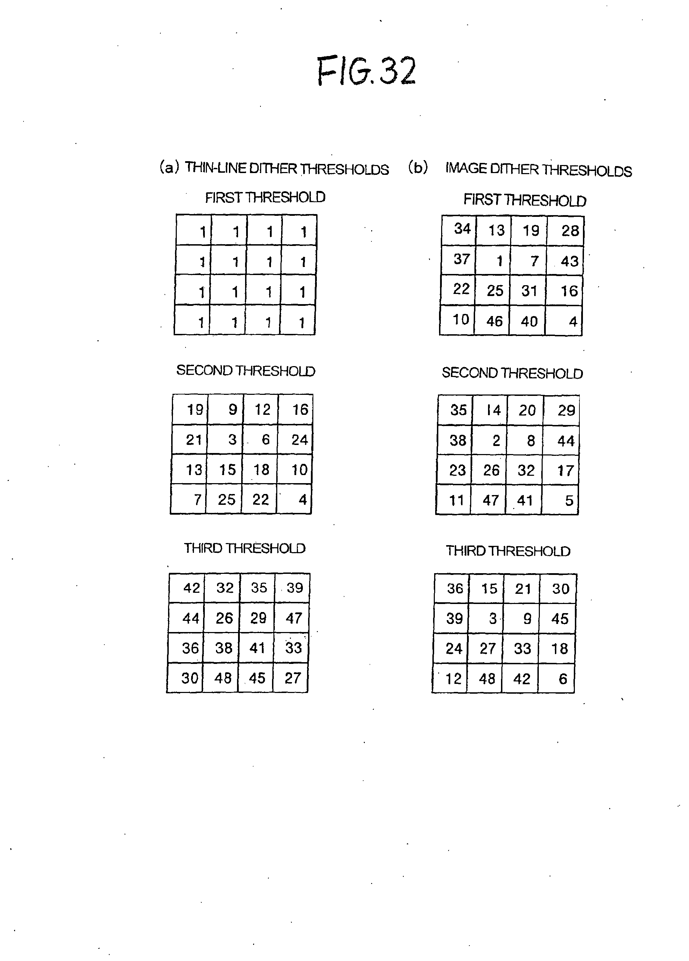

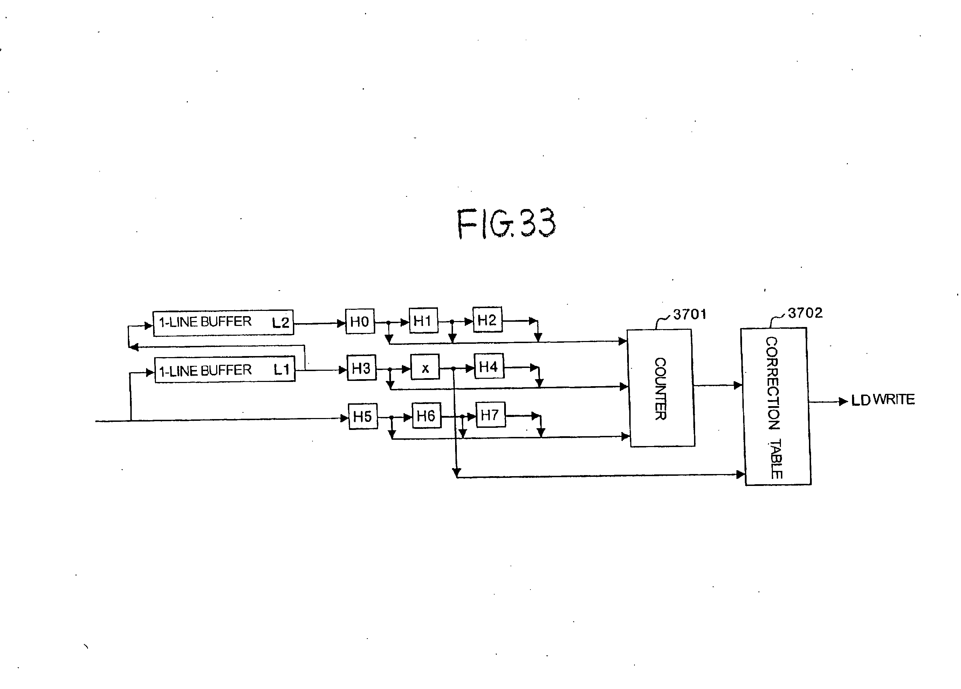

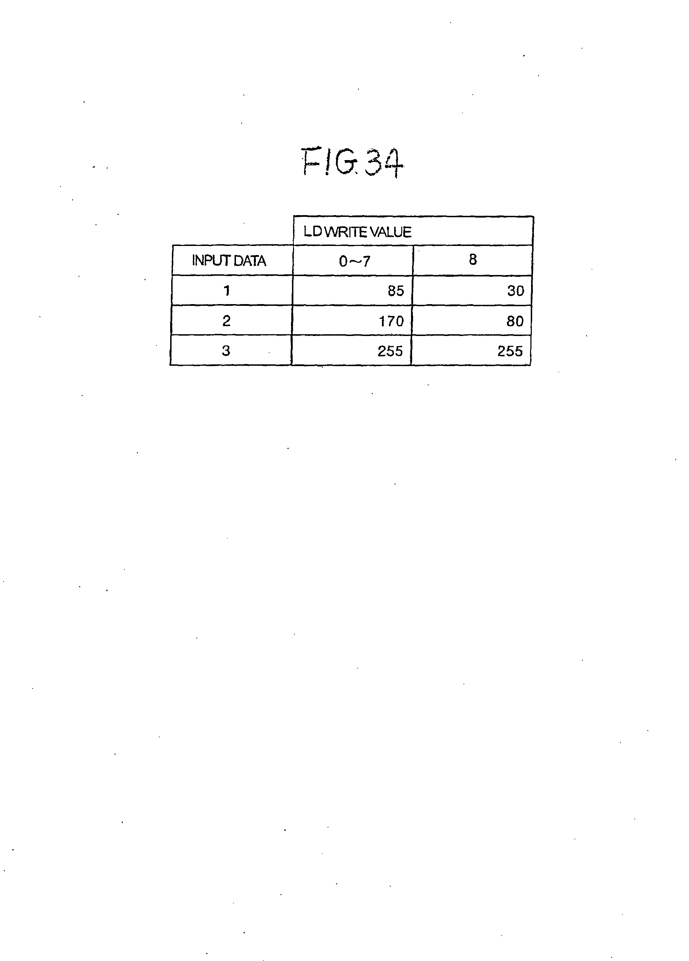

Fig. 30 is a block diagram that shows a schematic configuration of a printer controller shown in Fig. 29; Fig. 31 is a flowchart that shows a processing procedure for the printer controller shown in Fig. 30; Fig. 32 shows dither tables that indicate dither thresholds for pseudo halftone processing for thin lines and dither thresholds for images; Fig. 33 is a block diagram that shows a schematic configuration of the major part of a printer engine shown in Fig. 29; and Fig. 34 is an explanatory view that shows the contents stored in the correction table.

BEST MODE FOR CARRYING OUT THE INVENTION

The image formation device of the present invention, applied to a color image formation device, will be explained below with reference to the drawings.

First Embodiment:

Fig. 1 shows a mechanical structure of a color image formation device according to a first embodiment of the present invention. In this figure, the reference numeral 1 denotes a flexible belt-like photoreceptor as an image carrier (recording medium). The belt-like photoreceptor 1 is suspended around rotating rollers 2 and 3 and is rotated clockwise when the rotating rollers 2 and 3 drive it. The reference numeral 4 denotes a charger as a charging unit, and 5 denotes a laser writing unit as an image exposing unit. The reference numerals 6 to 9 denote developing devices as developing units that contain different specific color toners therein.

The laser writing unit 5 is housed in a support cabinet having a slit-like aperture for exposure formed on the upper surface of the support cabinet to be incorporated in the device body. The laser writing unit 5 may include a light emission section and a convergent optical transmission medium integrally. The charger 4 and a cleaning unit 15 are arranged opposite to the rotating roller 2 of the two rotating rollers 2 and 3 that allow the belt-like photoreceptor 1 to be suspended around them.

The developing devices 6 to 9 contain toners of yellow, magenta, cyan, and black, respectively, for example. These devices include development sleeves that are close to or contact with the belt-like photoreceptor 1 at certain positions, and also have functions of developing a latent image on the belt-like photoreceptor 1 by a non-contact development method or a contact development method. The reference numeral 10 denotes an intermediate transfer belt as a transferred image carrier (recording medium). The intermediate transfer belt 10 is suspended around rotating rollers 11 and 12 and is rotated counterclockwise when a bias roller 13 is driven.

The belt-like photoreceptor 1 and the intermediate transfer belt 10 contact the rotating roller 3. 'Thus, a first developed image on the belt-like photoreceptor 1 is transferred onto the intermediate transfer belt 10 by the bias roller 13 disposed inside the intermediate transfer belt 10. By repeating similar processes, second, third, and fourth developed images are superimposed on one another on the intermediate transfer belt 10 so that the images are transferred without any positional deviation.

A transfer roller 14 is disposed so as to come in contact with and separate from the intermediate transfer belt 10. The reference numeral 15 denotes a cleaner for the belt-like photoreceptor 1, and 16 denotes a cleaner for the intermediate transfer belt 10. The cleaning unit 16 has a blade 16A, kept at a position separated from the surface of the intermediate transfer belt 10 during image formation, and at a position press-contacted with the surface of the intermediate transfer belt 10 as shown only during cleaning after the image formation.

The image formation device operates, for example, in the following process for color image formation. A multicolored image formation according to the first embodiment is achieved in accordance with the following image formation system. An image reader, not shown, includes a color image data input section (scanner) that can obtain data when an image pickup device scans an original draft. The data is operationally processed in an image data processor to create image data (multivalue bitmap data), which is stored once in an image memory.

The image data stored in the image memory is then read out for image formation and fed to the color image formation device shown in Fig. 1. Image data (color signal) is output from the image reader different from the color image formation device (printer). When the output image data is input to the laser writing unit 5 through a γ-correcting section and a writing section for a printer controller and engine as explained later, the laser writing unit 5 operates in the following manner.

A not-shown semiconductor laser generates a laser beam modulated in response to image data. The laser beam is polarized and scanned by a polygon mirror 5B that is rotated by a drive motor 5A. After passing through an fθ lens 5C, the laser beam is bent at a mirror 5D, and then exposed onto the circumference of the belt-like photoreceptor 1 which has been erased by an erasing lamp 21 and charged uniformly by the charger 4 in advance, to form an electrostatic latent image thereon.

The image pattern to be exposed is one of image patterns having respective monochromatic colors obtained when a desired full-color image is decomposed into the colors of yellow, magenta, cyan, and black. Electrostatic latent images formed on the belt-like photoreceptor 1 are sequentially developed by the developing devices 6 to 9 of yellow, magenta, cyan, and black constituting a rotary developing unit to form monochromatic images (dot images), respectively. The monochromatic images are then transferred to and superimposed on each other on the intermediate transfer belt 10 that rotates counterclockwise while being in contact with the belt-like photoreceptor 1.

The images of yellow, magenta, cyan, and black superimposed on the intermediate transfer belt 10 are transferred by the transfer roller 14 to a transfer paper conveyed from a paper feed tray 17 to a transfer portion through a paper feed roller 18 and regist rollers 19. After completion of the transfer, the transfer paper is subjected to fixing by a fixing device 20 to finish a full-color image. The intermediate transfer belt 10 and the belt-like photoreceptor 1 are seamless.

Fig. 2 is an enlarged view that shows a part of the color image formation device shown in Fig. 1. The intermediate transfer belt 10 has the six marks 41A to 41F on the edge thereof. When a mark detecting sensor 40 senses an arbitrary mark (for example, 41A), a first color writing is started, and when the mark detecting sensor 40 senses the mark 41A again after one rotation, a second color writing is started.

At this point in time, the number of marks is managed so as to prevent the marks 41B to 41F from being used as write timings and also to mask the corresponding signals from the mark detecting sensor 40. At a location slightly upstream from the contact portion of the belt-like photoreceptor 1 with the intermediate transfer belt 10, a P sensor 22 as an optical sensor is arranged for detecting an amount of toner (image density) on the belt-like photoreceptor 1. The P sensor 22 may be disposed at a location suitable for detecting the image density on the intermediate transfer belt 10.

Fig. 3 is a block diagram that shows a configuration of the processing section applied to the color image formation device shown in Fig. 1. In Fig. 3, image data D is such data that has a weight of four bits and is subjected to multilevel dither processing. A 1-line buffer $L_0$ is a buffer that temporarily holds the image data D for one line. A 1-line buffer $L_1$ is a buffer that temporarily holds the image data D delayed by one line from the 1-line buffer $L_0$.

A 4-bit/1-bit converter 100 is interposed between the 1-line buffer $L_1$ and a 1-line buffer $L_2$ to convert the 4-bit weighed image data D held in the 1-line buffer $L_1$ into data with a weight of one bit. Specifically, if all bits in the 4-bit weighed image data D are "0", the 4-bit/1-bit converter 100 converts the image data D into 1-bit data of "0". If any one of bits in the image data D is "1", it converts the image data D into 1-bit data of "1". In other words, the data from the 4-bit/1-bit converter 100 is data that indicates the presence or absence of written image data.

The 1-line buffer $L_2$ is a buffer that temporarily holds the 1-bit weighed image data converted by the 4-bit/1-bit converter 100. A 1-line buffer $L_3$ is a buffer that temporarily holds the image data held in the 1-line buffer $L_2$. Latch circuitries D04 to D44 are arranged corresponding to the 1-line buffers $L_3$ to $L_0$ and the input line to latch the output data of the 1-line buffers $L_3$ to $L_0$ and the image data D on the input line in synchronization with a synchronizing signal.

Latch circuitries D00 to D40 are arranged corresponding to the latch circuitries D04 to D44 to latch the output data of the latch circuitries D04 to D44 in synchronization with the synchronizing signal, respectively. Latch circuitries D01, D11, a target dot latch circuitry x, and latch circuitries D31 and D41 are arranged corresponding to the latch circuitries D00 to D40 to latch the output data of the latch circuitries D00 to D40 in synchronization with the synchronizing signal, respectively.

The target dot latch circuitry x holds image data associated with a target dot. Latch circuitries D02 to D42 are arranged corresponding to the latch circuitries D01, D11, the target dot latch circuitry x, and the latch circuitries D31 and D41 to latch the output data of the latch circuitries D01, D11, the target dot latch circuitry x, and the latch circuitries D31 and D41 in synchronization with the synchronizing signal, respectively. Latch circuitries D03 to D43 are arranged corresponding to the latch circuitries D02 to D42 to latch the output data of the latch circuitries D02 to D42.

A determination section 200 determines a situation of the surrounding around the target dot (such as the presence or absence of a dot) by referring to the image data in each of the latch circuitries (a dot on the surrounding around the target dot in the main scanning direction and the subscanning direction). The determination section 200 outputs the determined result as an additional-on/off signal b, or an emphasis signal c. The additional-on/off signal b is a signal for instructing an adder 400, explained later, to or not to add an additional value m (an arbitrary value), to target dot image data d from the target dot latch circuitry x. If the value is added, then the additional-on/off signal b becomes "1", and if not, the additional-on/off signal b becomes "0".

Further, the determination section 200 determines the presence or absence of and the number of all output data from the latch circuitries D40, D30, D20, D10, D00, D43, D33, D23, D13, D03, D00, D01, D02, D40, D41, and D42, and outputs the emphasis signal c of "1" if all the output data are "0". In cases other than this case, the determination section 200 outputs the emphasis signal c of "0". An adder 400 adds the additional value m (an arbitrary value) stored in a storage 300 to the target dot image data d of the target dot latch circuitry x under the following condition. Detailed operation of the adder 400 will be explained later.

Operation of the first embodiment is explained next. The multilevel dither-processed 4-bit image data D shown in Fig. 3 is sequentially latched line by line in the latch circuitry D44 in synchronization with the synchronizing signal and also sequentially held in the 1-line buffer $L_0$. At the next synchronized timing, the output data. of the 1-line buffer $L_0$ is latched in the latch circuitry D34 and is also held in the 1-line buffer $L_1$.

At the next synchronized timing, the output data of the 1-line buffer $L_1$ is latched in the latch circuitry D24, and also converted from 4 bits into 1 bit at the 4-bit/1-bit converter 100, then held in the 1-line buffer $L_2$ as 1-bit data. If the dot corresponding to the output data from the 1-line buffer $L_1$ is a space dot, the data from the 4-bit/1-bit converter 100 is "0". In contrast, if the dot corresponding to the output data from the 1-line buffer $L_1$ is not a space dot, then the data from the 4-bit/1-bit converter 100 is "1".

At the next synchronized timing, the output data of the 1-line buffer $L_2$ is latched in the latch circuitry D14 and is also held in the 1-line buffer $L_3$. At the next synchronized timing, the output data of the 1-line buffer $L_3$ is latched in the latch circuitry D04. Thereafter, in synchronization with the synchronizing signal, the data latched in the latch circuitries D04 to D44 are sequentially shifted from the latch circuitries D00 to D40, through the latch circuitries D01, D11, the target dot latch circuitry x, and the latch circuitries D31 and D41, and through the latch circuitries D02 to D42, to the latch circuitries D03 to D43, respectively.

In the series of shift operations, respective pieces of the output data from the latch circuitries D04 to D44, D00 to D40, D01, D11, D31, D41, D02 to D42, and D03 to D43 are fed to the determination section 200. The output data from the target dot latch circuitry x is fed to the adder 400.

The determination section 200 outputs the additional-on/off signal b of "1" if the target dot image data d in the target dot latch circuitry x is "0" and also satisfies the following <Condition 1> or <Condition 2>.

<Condition 1>

- The output data of the latch circuitry D22 is not "0".
- All pieces of the output data of the latch circuitries D10 to D13, D30 to D33, D20 and D23 surrounding around the target dot latch circuitry x are "0".

<Condition 2>

- <Condition 1> is not satisfied.
- The latch circuitry D11 is not "0".
- All pieces of the output data from the latch circuitries D00 to D02, D10, D12, D20, D22, and D30 to D32 surrounding around the target dot latch circuitry x are "0".

The <Condition 1> and <Condition 2> can be satisfied if the target dot is a dot that is solely present at least in the main scanning direction and the subscanning direction. If the <Condition 1> or <Condition 2> is satisfied, the determination section 200 outputs the additional-on/off signal b of "1" to the adder 400. The determination section 200 also outputs a phase signal $S_2$ of "0" to a writing section (not shown). Thus, the adder 400 adds the additional value m ("32" in this case) stored in the storage 300 to the target dot image data d latched in the target dot latch circuitry x. As a result, the density of the target dot image data d is corrected by the additional value m (= "32"). The density-corrected target dot is written into a recording medium.

If the phase signal $S_2$ is "0", as shown in Fig. 4(a) (Mode "0", Right mode), the dot width of the target dot grows from the center to the left, and two dots are linked with each other at the center. Therefore, the target dot is dot-emphasized with natural touch.

If the <Condition 1> and <Condition 2> are not be satisfied, the additional-on/off signal b is determined "0" and the phase signal $S_2$ is determined "1" so that the density correction with the additional value m is not executed. In this case, the determination section 200 outputs the target dot image data d to the writing section (not shown) as 8-bit write data $S_1$ without correcting the density of the target dot image data d from the target dot latch circuitry x. Thus, the density-uncorrected target dot is written into a recording medium.

If the phase signal $S_2$ is "1", as shown in Fig. 4(b) (Mode "1", Left mode), the dot width of the target dot grows from the center to the right, and two dots are linked with each other at the center. Therefore, the target dot is dot-emphasized with natural touch. If the <Condition 1> is satisfied, a dot is formed as shown in Fig. 4(c). In this formation, the additional value m is added to the target dot image data d corresponding to a single dot (target dot).

If all pieces of the output data from the latch circuitries D40, D30, D20, D10, D00, D43, D33, D23, D13, D03, D00, D01, D02, D40, D41, D42 are "0", or if a space dot is present at either of dots adjacent to both sides of the target dot at least in the main scanning direction, the determination section 200 outputs the emphasis signal c of "1" to the adder 400. The determination section 200 also outputs the phase signal $S_2$ of "0" to the writing section (not shown). Thus, as shown in Fig. 4(d), the phase of dot formation is shifted in the opposite direction to the side of the space dot adjacent to the target dot. Therefore, it is possible to optimize dot reproduction based on the situation of the surrounding around the target dot.

If the data is output from the target dot latch circuitry x (the presence of a dot), and if the data is output from the latch circuitries D20 and D22 adjacent to the target dot latch circuitry x (the presence of dots), or if the data is output from the latch circuitry D22 (the presence of a dot), the dot or dots are written in the left mode. If the data is output from the latch circuitry D20 (the presence of a dot), the dot is written in the right mode. Thus, two dots are linked with each other to form dots with natural touch.

Second Embodiment:

The processing section shown in Fig. 3 and exemplified in the first embodiment may be replaced with a processing section configured as shown in Fig. 5. This case is explained below as a second embodiment. In Fig. 5, the same parts as those in Fig. 3 are denoted with the same reference numerals. The latch circuitries D04 to D44, D40 to D43 and the 1-line buffer $L_0$ shown in Fig. 3 are omitted from the configuration in Fig. 5. The configuration of Fig. 5 is such that the output data from the 1-line buffers $L_3$ to $L_1$ and image data D are latched in the latch circuitries D00 to D30 of Fig. 5. In addition, the output data of the target dot latch circuitry x is fed to both the determination section 200 and the adder 400.

Operation of the second embodiment is explained next. The multilevel dither-processed 4-bit image data D shown in Fig. 5 is sequentially latched line by line in the latch circuitry D30 and is also sequentially held in the 1-line buffer $L_1$ in synchronization with the synchronizing signal. At the next synchronized timing, the output data of the 1-line buffer $L_1$ is latched in the latch circuitry D20 and also converted from 4 bits into 1 bit at the 4-bit/1-bit converter 100, and then the converted image data is held in the 1-line buffer $L_2$ as 1-bit data.

At the next synchronized timing, the output data from the 1-line buffer $L_2$ is latched in the latch circuitry D10 and is also held in the 1-line buffer $L_3$. If the dot corresponding to the output data from the 1-line buffer $L_1$ is a space dot, the data from the 4-bit/1-bit converter 100 is "0" like in the first embodiment. In contrast, if the dot corresponding to the output data from the 1-line buffer $L_1$ is not a space dot, the data from the 4-bit/1-bit converter 100 is "1".

At the next synchronized timing, the output data from the 1-line buffer $L_3$ is latched in the latch circuitry D00. Thereafter, like in the first embodiment, in synchronization with the synchronizing signal, the pieces of data respectively latched in the latch circuitries D00 to D30 are sequentially shifted from the latch circuitries D01, D11, the target dot latch circuitry x and the latch circuitry D31, through the latch circuitries D02 to D32, to the latch circuitries D03 to D33, respectively.

In the series of shift operations, the output data from the latch circuitries D00 to D30 and the latch circuitries D01, D11, D31, D02 to D32, and D03 to D33 are fed to the determination section 200, respectively. The output data from the target dot latch circuitry x is fed to the determination section 200 and the adder 400.

The determination section 200 outputs the additional-on/off signal b of "1" if the output data from the target dot latch circuitry x is "0" and also satisfies the following <Condition 3> or <Condition 4>.

<Condition 3>

- The output data from the latch circuitry D22 is not "0".
- All pieces of the output data from the latch circuitries D10 to D13, D30 to D33, D20, and D23 surrounding around the target dot latch circuitry x are "0".

<Condition 4>

- <Condition 3> is not satisfied.
- The latch circuitry D11 is not "0".
- All pieces of the output data from the latch circuitries D00 to D02, D10, D12, D20, D22, and D30 to 32 surrounding around the target dot latch circuitry x are "0".

The <Condition 3> and <Condition 4> can be satisfied if the target dot is a dot solely present at least in the main scanning direction and the subscanning direction and if a dot located at the minimal distance from the target dot is space. If the <Condition 3> or <Condition 4> is satisfied, the determination section 200 outputs the additional-on/off signal b of "1" to the adder 400.

The determination section 200 also outputs the phase signal $S_2$ of "0" to the writing section (not shown). Thus, the adder 400 adds the additional value m ("32" in this case) stored in the storage 300 to the target dot image data d latched in the target dot latch circuitry x. As a result, the density of the target dot image data d is corrected by the additional value m (= "32"). The density-corrected target dot is written into a recording medium.

If the phase signal $S_2$ is "0", as shown in Fig. 6(a) (Mode "0", Right mode), the dot width of the target dot grows from the center to the left, and two dots are linked with each other at the center. Therefore, the target dot is dot-emphasized with natural touch.

If the <Condition 3> and <Condition 4> are not satisfied, the additional-on/off signal b is determined "0" and the phase signal $S_2$ is determined "1" so that the density correction with the additional value m is not executed. In this case, the determination section 200 outputs the target dot image data d from the target dot latch circuitry x to the writing section (not shown) as 8-bit write data $S_1$ without correcting the density of the target dot image data d. Thus, the density-uncorrected target dot is written into a recording medium.

If the phase signal $S_2$ is "1", as shown in Fig. 6(b) (Mode "1", Left mode), the dot width of the target dot grows from the center to the right, and two dots are linked with each other at the center. Therefore, the target dot is dot-emphasized with natural touch. If the <Condition 3> is satisfied, a dot is formed as shown in Fig. 6(c). In this formation, the additional value m is added to the target dot image data d corresponding to a single dot (target dot).

According to the first and second embodiments as explained above, based on the surrounding situation around the target dot, the target dot image data d corresponding to the target dot is increased. Therefore, it is possible to achieve optimal dot reproduction based on the surrounding situation around the target dot and improve reproducibility of a highlight.

Third Embodiment:

The processing section shown in Fig. 3 and exemplified in the first embodiment may be replaced with a processing section configured as shown in Fig. 7. This case is explained below as a third embodiment. In Fig. 7, image data DA has a weight of two bits and is dither-processed. A 1-line buffer $L_0$ is a buffer that temporarily holds image data DA for one line. A 1-line buffer $L_1$ is a buffer that temporarily holds the image data DA delayed by one line from the 1-line buffer $L_0$.

A 2-bit/1-bit converter 500 is interposed between the 1-line buffer $L_1$ and a 1-line buffer $L_2$ to convert the 2-bit weighed image data DA held in the 1-line buffer $L_1$ into data with a weight of one bit. Specifically, if all bits in the 2-bit weighed image data DA are "0", the 2-bit/1-bit converter 500 converts the image data DA into 1-bit data of "0". If any one of bits in the image data DA is "1", it converts the image data DA into 1-bit data of "1". In other words, the data from the 2-bit/1-bit converter 500 is data that indicates the presence or absence of written image data.

The 1-line buffer $L_2$ is a buffer that temporarily holds the 1-bit weighed image data converted by the 2-bit/1-bit converter 500. A 1-line buffer $L_3$ is a buffer that temporarily holds the image data held in the 1-line buffer $L_2$. Latch circuitries D00, D03, D30, D32, and D34 are arranged corresponding to the 1-line buffers $L_3$ to $L_0$ and the input line to latch the output data from the 1-line buffers $L_3$ to $L_0$ and the image data DA on the input line in synchronization with a synchronizing signal.

The latch circuitries D01, D04, D31, D33, and D35 are arranged corresponding to the latch circuitries D00, D03, D30, D32, and D34 to latch the output data from the latch circuitries D00, D03, D30, D32, and D34 in synchronization with the synchronizing signal, respectively. Latch circuitries D02, D05, a target dot latch circuitry x, and latch circuitries D20 and D23 are arranged corresponding to the latch circuitries D00, D03, D30, D32, and D34 to latch the output data from the latch circuitries D01, D04, D31, D33, and D35 in synchronization with the synchronizing signal, respectively.

The target dot latch circuitry x holds target dot image data $DX_1$ associated with a target dot. Latch circuitries D10, D12, D14, D21, and D24 are arranged corresponding to the latch circuitries D02, D05, the target dot latch circuitry x, and the latch circuitries D20 and D23 to latch the output data from the latch circuitries D02, D05, the target dot latch circuitry x, and the latch circuitries D20 and D23 in synchronization with the synchronizing signal, respectively. Latch circuitries D11, D13, D15, D22, and D25 are arranged corresponding to the latch circuitries D10, D12, D14, D21, and D24 to latch the respective output data from the latch circuitries D10, D12, D14, D21, and D24.

Four areas in total referred to as multi-dot areas AR0 to AR3 are defined around the target dot corresponding to the target dot latch circuitry x. That is, there are 24 dots around the target dot, and the 24 dots are assigned to the four areas by six dots as a group. Specifically, six dots corresponding to the latch circuitries D00 to D05 are assigned to the multi-dot area AR0. Each of the multi-dot areas AR0 to AR3 is an area spread in the main and subscanning directions.

Six dots corresponding to the latch circuitries D10 to D15 are assigned to the multi-dot area AR1. Six dots corresponding to the latch circuitries D20 to D25 are assigned to the multi-dot area AR2. Finally, six dots corresponding to the latch circuitries D30 to D35 are assigned to the multi-dot area AR3.

A determination section 600 determines the surrounding situation around the target dot (such as the presence or absence of a dot) on an area-basis of the multi-dot area AR0 to AR3 by referring to the image data in each of the latch circuitries. The determination section 600 outputs the determined result as a conversion table code $CD_1$ (see Fig. 8(a)). Specifically, the determination section 600 determines if there is at least one image data of "1" (the presence of a dot) within six pieces of image data latched in the latch circuitries D00 to D05 within the multi-dot area AR0. Similarly, the determination section 600 determines if there is at least one image data of "1" (the presence of a dot) within six pieces of image data held in each of the multi-dot areas AR1 to AR3, respectively.

The determination section 600 receives the determined results on the multi-dot areas AR0 to AR3 and determines the conversion table code $CD_1$ as shown in Fig. 8(a). Specifically, if the number of multi-dot areas (the number of areas) each of which has at least one piece of image data of "1" (the presence of a dot) is "zero" among the multi-dot areas AR0 to AR3, that is, there is no dot present in the surrounding of the target dot, the determination section 600 sets the conversion table code $CD_1$ to 0.

If the number of multi-dot areas (the number of areas) each of which has at least one piece of image data of "1" (the presence of a dot) is "one" among the multi-dot areas AR1 to AR3, the determination section 600 sets the conversion table code $CD_1$ to 1. If the number of multi-dot areas (the number of areas) each of which has at least one piece of image data of "1" (the presence of a dot) is "two" among the multi-dot areas AR0 to AR3, the determination section 600 sets the conversion table code $CD_1$ to 2.

If the number of multi-dot areas (the number of areas) each of which has at least one piece of image data of "1" (the presence of a dot) is "three" among the multi-dot areas AR0 to AR3, the determination section 600 sets the conversion table code $CD_1$ to 3. Finally, if the number of multi-dot areas (the number of areas) each of which has at least one piece of image data of "1" (the presence of a dot) is "four" among the multi-dot areas AR0 to AR3, that is, there are dots in the surrounding (the multi-dot areas AR0 to AR3) around the target dot, the determination section 600 sets the conversion table code $CD_1$ to 4. The determination section 600 also outputs a phase signal $PH_1$ later explained.

A storage 700 stores a conversion table $T_1$ shown in Fig. 8(a). The conversion table $T_1$ is used to convert a level of the target dot image data $DX_1$ latched in the target dot latch circuitry x by a magnification corresponding to the conversion table code $CD_1$. Fig. 8(b) shows a graph $G_1$ obtained by graphing the conversion table $T_1$. Referring back to Fig. 7, a converter 800 converts a level of the target dot image data $DX_1$ (2 bits) into target dot image data $DX_1'$ (3 bits) by referring to the conversion table code $CD_1$ and the conversion table $T_1$.

Operation of the third embodiment is explained next. The dither-processed 2-bit image data DA shown in Fig. 7 is sequentially latched line by line in the latch circuitry D34 and also sequentially held in the 1-line buffer $L_0$ in synchronization with the synchronizing signal. At the next synchronized timing, the output data from the 1-line buffer $L_0$ is latched in the latch circuitry D32 and is also held in the 1-line buffer $L_1$.

At the next synchronized timing, the output data from the 1-line buffer $L_1$ is latched in the latch circuitry D30, and is converted from 2 bits into 1 bit in the 2-bit/1-bit converter 500, and then the converted data is held in the 1-line buffer $L_2$ as 1-bit data. At the next synchronized timing, the output data from the 1-line buffer $L_2$ is latched in the latch circuitry D03 and is also held in the 1-line buffer $L_3$. If the dot corresponding to the output data from the 1-line buffer $L_1$ is a space dot, the data from the 2-bit/1-bit converter 500 is "0". In contrast, if the dot corresponding to the output data from the 1-line buffer $L_1$ is not a space dot, the data from the 2-bit/1-bit converter 500 is "1".

At the next synchronized timing, the -output data from the 1-line buffer $L_3$ is latched in the latch circuitry D00. Thereafter, in synchronization with the synchronizing signal, the each data latched in the latch circuitries D00, D03, D30, D32, and D34 are sequentially shifted from the latch circuitries D01, D04, D31, D33, and D35, through the latch circuitries D02, D05, the target dot latch circuitry x, and the latch circuitries D20 and D23, and through the latch circuitries D10, D12, D14, D21, and D24, to the latch circuitries D11, D13, D15, D22, and D25, respectively.

In the series of shift operations, the output data from the latch circuitries D00, D03, D30, D32, and D34, the latch circuitries D01, D04, D31, D33, and D35, the latch circuitries D02 and D05, the latch circuitries D20 and D23, the latch circuitries D10, D12, D14, D21, and D24, and the latch circuitries D11, D13, D15, D22, and D25 are fed to the determination section 600, respectively. The output data from the target dot latch circuitry x is fed to the converter 800.

The determination section 600 determines the surrounding situation around the target dot (such as the presence or absence of a dot) on an area-basis of the multi-dot area AR0 to AR3 by referring to the image data in each of the latch circuitries other than the target dot latch circuitry x. The determination section 600 receives the determined results on the multi-dot areas AR0 to AR3 and determines the conversion table code $CD_1$ as shown in Fig. 8(a). If the number of multi-dot areas (the number of areas) each of which has at least one piece of image data of "1" (the presence of a dot) is "zero" among the multi-dot areas AR0 to AR3, that is, there is no dot in the surrounding around the target dot, the determination section 600 sets the conversion table code $CD_1$ to 0.

If the number of multi-dot areas (the number of areas) each of which has at least one piece of image data of "1" (the presence of a dot) is "one" among the multi-dot areas AR0 to AR3, the determination section 600 sets the conversion table code $CD_1$ to 1. Similarly, if the number of multi-dot areas (the number of areas) each of which has at least one piece of image data of "1" (the presence of a dot) is "four" among the multi-dot areas AR0 to AR3, the determination section 600 sets the conversion table code $CD_1$ to 4. In this case, it is assumed that the conversion table code $CD_1$ is set to 0.

When the converter 800 receives the conversion table code $CD_1$ (= 0), the converter 800 reads out the conversion table $T_1$ shown in Fig. 8(a) from the storage 700 to identify a part corresponding to the conversion table code $CD_1 = 0$. In this case, the target dot image data $DX_1$ (2 bits) is level-converted (density-corrected) into the target dot image data $DX_1'$ (3 bits) as follows:

$$\text{Target dot image data } DX_1 = 0 \rightarrow \text{Target dot image data } DX_1' = 0$$

$$\text{Target dot image data } DX_1 = 1 \rightarrow \text{Target dot image data } DX_1' = 4$$

$$\text{Target dot image data } DX_1 = 2 \rightarrow \text{Target dot image data } DX_1' = 6$$

$$\text{Target dot image data } DX_1 = 3 \rightarrow \text{Target dot image data } DX_1' = 7$$

The density-corrected target dot image data $DX_1'$ is written into a recording medium. If the image data latched in the latch circuitry D14 shown in Fig. 7 is "0", the determination section 600 outputs a phase signal $PH_1$ of "0". If the phase signal $PH_1$ is "0", as shown in Fig. 9(a) (Mode "0", Right mode), the dot width of the target dot grows from the center to the left. If the phase signal $PH_1$ is "1", as shown in Figs. 9(a), 10(a) and 10(b) (Mode "1", Left mode), two dots are linked with each other at the center. Therefore, the target dot is formed with natural touch.

As shown in Figs. 8(a) and 8(b), if the conversion table code $CD_1 = 0$ in the third embodiment, there is no dot around the target dot. Therefore, the level of the target dot image data $DX_1$ is converted to a level slightly higher than a level that is supposed to be. If the conversion table code $CD_1 = 1$, 2, or 3, the target dot image data $DX_1$ is level-converted linearly.

If the conversion table code $CD_1 = 4$, there definitely exist dots around the target dot. Therefore, the level of the target dot image data $DX_1$ is converted to a level slightly lower than a level that is supposed to be. The conversion table code $CD_1 = 0$ to 3 is referred to in a centralized dither processing. The conversion table code $CD_1 = 4$ is referred to in a distributed dither processing. Therefore, in the third embodiment, it is possible to perform level conversion for writing to a recording medium optimally based on a dither type.

According to the third embodiment as explained above, based on the determined result by the determination section 600, the converter 800 level-converts the target dot. Therefore, it is possible to achieve optimal dot reproduction even for a high-resolution dot based on the surrounding situation around the target dot.

Fourth Embodiment:

The processing section shown in Fig. 3 and exemplified in the first embodiment may be replaced with a processing section configured as shown in Fig. 11. This case is explained below as a fourth embodiment. In Fig. 11, image data DA has a weight of two bits and is dither-processed. The image data DA has resolutions of, for example, 1200 dpi in the main scanning direction and 600 dpi in the subscanning direction.

A serial/parallel converter 900 subjects the 2-bit image data DA to serial-parallel conversion to obtain 2-dot image data DA'. The image data DA' is associated with a set of 2 dots. The serial/parallel converter 900 converts the image data DA with 1200 dpi in the main scanning direction and 600 dpi in the subscanning direction into the image data DA' with 600 dpi in the main scanning direction and 600 dpi in the subscanning direction. A 1-line buffer $L_0$ is a buffer that temporarily holds image data DA' for one line. A 1-line buffer $L_1$ is a buffer that temporarily holds the image data DA' delayed by one line from the 1-line buffer $L_0$.

Latch circuitries D00 to D02 are arranged corresponding to the serial/parallel converter 900 and to the 1-line buffers $L_0$ and $L_1$ to latch the output data from the serial/parallel converter 900 and the 1-line buffers $L_0$ and $L_1$ in synchronization with the synchronizing signal, respectively. A latch circuitry D10, a target dot latch circuitry x, and a latch circuitry D12 are arranged corresponding to the latch circuitries D00 to D02 to latch the output data from the latch circuitries D00 to D02 in synchronization with the synchronizing signal, respectively. The target dot latch circuitry x holds target dot image data $DX_2$ associated . with a target dot.

There are 8 sets of dots in total, each set consisting of 2 dots, around the target dot corresponding to the target dot latch circuitry x. The serial/parallel converter 900 allows these dots and the target dot to have the same resolution in the main and subscanning directions. Latch circuitries D20, D21, and D22 are arranged corresponding to the latch circuitry D10, the target dot latch circuitry x, and the latch circuitry D12 to latch the output data from the latch circuitry D10, the target dot latch circuitry x, and the latch circuitry D12.

A determination section 1000 determines the surrounding situation around the target dot (such as the presence or absence of a dot) by referring to the image data in each of the latch circuitries, and outputs the determined result as a conversion table code $CD_2$ (see Fig. 12(a)). Specifically, the determination section 1000 determines the number of image data of "1" (the presence of a dot) (the number of "1" data) among six pieces of image data latched in the latch circuitries D00 to D02, D10, D12, and D20 to D22. The determination section 1000 then outputs the conversion table code $CD_2$ corresponding to the number of "1" data.

A storage 1100 stores a conversion table $T_2$ shown in Fig. 12(a). The conversion table $T_2$ is used to convert a level of the target dot image data $DX_2$ latched in the target dot latch circuitry x by a magnification corresponding to the conversion table code $CD_2$. Fig. 12(b) shows a graph $G_2$ obtained by graphing the conversion table $T_2$. Referring back to Fig. 11, a converter 1200 converts a level of the target dot image data $DX_2$ (2 bits) into target dot image data $DX_2$ (3 bits) by referring to the conversion table code $CD_2$ and the conversion table $T_2$.

Operation of the fourth embodiment is explained next. The dither-processed 2-bit image data DA shown in Fig. 11 is converted into the image data DA' in the serial/parallel converter 900. Thus, dots corresponding to the image data DA' have the same resolution (600 dpi) in the main and subscanning directions. The image data DA' is sequentially latched line by line in the latch circuitry D00 and is also sequentially held in the 1-line buffer $L_0$ in synchronization with the synchronizing signal. At the next synchronized timing, the output data from the 1-line buffer $L_0$ is latched in the latch circuitry D01 and is also held in the 1-line buffer $L_1$.

At the next synchronized timing, the output data from the 1-line buffer $L_1$ is latched in the latch circuitry D02. Thereafter, in synchronization with the synchronizing signal, the data latched in the latch circuitries D00 to D02 are sequentially shifted, through the latch circuitry D10, the target dot latch circuitry x, and the latch circuitry D12, to the latch circuitries D20 to D22, respectively.

In the series of shift operations, the output data from the latch circuitries D00 to D02, the latch circuitry D10, the latch circuitry D12 and the latch circuitries D20 to D22 are fed to the determination section 1000, respectively. The output data from the target dot latch circuitry x is fed to the converter 1200.

The determination section 1000 determines the surrounding situation around the target dot (such as the presence or absence of a dot) by referring to the image data in each of the latch circuitries other than the target dot latch circuitry x. The determination section 1000 receives the determined results and determines the conversion table code $CD_2$ as shown in Fig. 12(a). If the number of latch circuitries holding image data of "1" (the presence of a dot) is zero among the latch circuitries D00 to D02, the latch circuitry D10, the latch circuitry D12, and the latch circuitries D20 to D22, that is, there is no dot in the surrounding around the target dot, the determination section 1000 sets the conversion table code $CD_2$ to 0.

If the number of latch circuitries holding image data of "1" (the presence of a dot) is one among the latch circuitries D00 to D02, the latch circuitry D10, the latch circuitry D12, and the latch circuitries D20 to D22, the determination section 1000 sets the conversion table code $CD_2$ to 1. If the number of latch circuitries holding image data of "1" (the presence of a dot) is two among the latch circuitries D00 to D02, the latch circuitry D10, the latch circuitry D12, and the latch circuitries D20 to D22, the determination section 1000 sets the conversion table code $CD_2$ to 2.

Similarly, if the number of latch circuitries holding image data of "1" (the presence of a dot) is eight among the latch circuitries D00 to D02, the latch circuitry D10, the latch circuitry D12, and the latch circuitries D20 to D22, the determination section 1000 sets the conversion table code $CD_2$ to 8. In this case, the conversion table code $CD_2$ is set to 0.

When the converter 1200 receives the conversion table code $CD_2$ (= 0), the converter 1200 reads out the conversion table $T_2$ shown in Fig. 12(a) from the storage 1100 to identify the part corresponding to the conversion table code $CD_2 = 0$. In this case, the target dot image data $DX_2$ (2 bits) is level-converted (density-corrected) into target dot image data $DX_2$' (3 bits) as follows:

$$\text{Target dot image data } DX_2 = 0 \rightarrow \text{Target dot image data } DX_2' = 0$$

$$\text{Target dot image data } DX_2 = 1 \rightarrow \text{Target dot image data } DX_2' = 4$$

$$\text{Target dot image data } DX_2 = 2 \rightarrow \text{Target dot image data } DX_2' = 5$$

$$\text{Target dot image data } DX_2 = 3 \rightarrow \text{Target dot image data } DX_2' = 7$$

The density-corrected target dot image data $DX_2'$ is written into a recording medium. In the fourth embodiment, as shown in Figs. 12(a) and 12(b), the case of the conversion table code $CD_2 = 0$ indicates that there is no dot around the target dot. Therefore, the level of the target dot image data $DX_2$ is converted to a level slightly higher than a level that is supposed to be. If the conversion table code $CD_2 = 1$ to 7, the target dot image data $DX_2$ is level-converted linearly.

The case of the conversion table code $CD_2 = 8$ indicates that there definitely exist dots around the target dot. Therefore, the level of the target dot image data $DX_2$ is converted to a level slightly lower than a level that is supposed to be. The conversion table code $CD_2 = 1$ to 7 is referred to in a centralized dither processing. The conversion table code $CD_2 = 8$ is referred to in a distributed dither processing. Therefore, in the fourth embodiment, it is possible to perform level conversion for writing to a recording medium optimally based on a dither type.

According to the fourth embodiment as explained above, based on the determined result from the determination section 1000, the target dot is level-converted. Therefore, it is possible to achieve optimal dot reproduction even for a high-resolution dot based on the surrounding situation around the target dot.

Fifth Embodiment:

The processing section shown in Fig. 3 and exemplified in the first embodiment may be replaced with a processing section configured as shown in Fig. 14. This case is explained below as a fifth

embodiment.

Fig. 13 is a block diagram that shows a configuration of a printer controller 1010 applied to a color image formation device according to the fifth embodiment of the present invention. The printer controller 1010 is interposed between a personal computer 1000a and a printer engine 1020, and has a function of receiving a command and image data for printing from the personal computer 1000a and outputting later-explained dither-processed image data to the printer engine 1020 based on the command.

The command includes a line command for subjecting thin-line image data to dither processing for thin lines, and an image command for subjecting pictorial image data to dither processing for images.

The printer controller 1010 comprises a personal computer interface 1011 that is an interface for receiving the command and image data from the personal computer 1000a. A CPU (Central Processing Unit) 1012 executes controls for processing in the sections such as a control for dither processing. A printer engine interface 1013 is an interface for feeding dither-processed image data to the printer engine 1020.

A ROM 1014 stores a first thin-line dither threshold matrix 1300, a second thin-line dither threshold matrix 1310, and a third thin-line dither threshold matrix 1320 shown in Fig. 21. The ROM 1014 also stores a first image dither threshold matrix 1400, a second image dither threshold matrix 1410, and a third image dither threshold matrix 1420 shown in Fig. 22.

The first thin-line dither threshold matrix 1300, the second thin-line dither threshold matrix 1310, and the third thin-line dither threshold matrix 1320 are used for dither processing of the thin-line image data when the line command is input.

The first image dither threshold matrix 1400, the second image dither threshold matrix 1410, and the third image dither threshold matrix 1420 are used for dither processing of the pictorial image data when the image command is input. Referring back to Fig. 13, a frame RAM 1015 stores bitmap data obtained by converting the image data sent from the personal computer 1000a to bitmap format. A bus 1016 connects the sections with each other in the printer controller 1010.

Fig. 14 is a block diagram that shows a configuration of the processing section applied to the color image formation device according to the fifth embodiment of the present invention, in which the printer controller 1010 and the printer engine 1020 of Fig. 13 are shown as a functional block diagram. In Fig. 14, serial image data DS is 2-bit weighed and dither-processed. The image data DS has resolutions of, for example, 1200 dpi in the main scanning direction and 600 dpi in the subscanning direction.

A serial/parallel converter 1030 subjects 2-bit image data DS to serial-parallel conversion to obtain parallel image data DP for 2 lines. Specifically, as shown in Figs. 15(a) to 15(c), the serial/parallel converter 1030 converts 2-line image data DS into parallel image data DP in a 1-line period $T_c$ of a synchronizing signal CLK.

For example, image data DS1 (the first line) and image data DS2 (the second line) are converted into parallel image data DP1 (the first line) and image data DP2 (the second line). In the next 1-line period $T_c$, image data DS3 (the third line) and image data DS4 (the fourth line) are converted into parallel image data DP3 (the third line) and image data DP4 (the fourth line).

The image data DP is data associated with a set of 2 dots. The serial/parallel converter 1030 converts the image data DS with 1200 dpi in the main scanning direction and 600 dpi in the subscanning direction into the image data DP with 600 dpi in the main scanning direction and 600 dpi in the subscanning direction. Referring back to Fig.

14, a 1-line buffer 1040 is a buffer that temporarily holds image data DP for one line. A 1-line buffer 1050 is also a buffer that temporarily holds image data DP for one line. A 1-line buffer 1060 is a buffer that temporarily holds the image data DP delayed by one line from the 1-line buffer 1050.

The image data DP from the serial/parallel converter 1030 is output to an EVEN processing section 1070 and an ODD processing section 1080 as the image data DP for five lines (two lines from the serial/parallel converter 1030, one line from the 1-line buffer 1040, 1 line from the 1-line buffer 1050, and one line from the 1-line buffer 1060) from the 1-line buffer 1040, the 1-line buffer 1050, and the 1-line buffer 1060. The image data DP fed to the ODD processing section 1080 is delayed by one line relative to that fed to the EVEN processing section 1070.

The EVEN processing section 1070 comprises a dummy latch circuitry EDM0, a latch circuitry ED0, a latch circuitry ED1, and a latch circuitry ED2 that are arranged corresponding to the 1-line buffer 1050, the 1-line buffer 1040, and the serial/parallel converter 1030 to latch the image data DP in synchronization with the synchronizing signal, respectively.

A latch circuitry EA0, a latch circuitry EA3, a latch circuitry EA5, and a latch circuitry EC0 are arranged corresponding to the dummy latch circuitry EDM0, the latch circuitry ED0, the latch circuitry ED1, and the latch circuitry ED2 to latch the output data from the dummy latch circuitry EDM0, the latch circuitry ED0, the latch circuitry ED1, and the latch circuitry ED2 in synchronization with the synchronizing signal, respectively.

A latch circuitry EA1, a target dot latch circuitry $E_x$, a latch circuitry EA6, and a latch circuitry EC1 are arranged corresponding to the latch circuitry EA0, the latch circuitry EA3, the latch circuitry EA5, and the latch circuitry EC0 to latch the output data from the latch circuitry EA0, the latch circuitry EA3, the latch circuitry EA5, and the latch circuitry EC0 in synchronization with the synchronizing signal, respectively.

A latch circuitry EA2, a latch circuitry EA4, a latch circuitry EA7, and a latch circuitry EC2 are arranged corresponding to the latch circuitry EA1, the target dot latch circuitry $E_x$, the latch circuitry EA6, and the latch circuitry EC1 to latch the output data from the latch circuitry EA1, the target dot latch circuitry $E_x$, the latch circuitry EA6, and the latch circuitry EC1 in synchronization with the synchronizing signal, respectively. The target dot latch circuitry $E_x$ holds target dot image data $DX_E$ associated with a target dot. A latch circuitry EB0, a latch circuitry EB1, a latch circuitry EB2, and a dummy latch circuitry EDM1 are arranged corresponding to the latch circuitry EA2, the latch circuitry EA4, the latch circuitry EA7, and the latch circuitry EC2 to latch the output data from the latch circuitry EA2, the latch circuitry EA4, the latch circuitry EA71, and the latch circuitry EC2, respectively.

Four areas in total including an area 1071A, an area 1071B, an area 1071C, and an area 1071D are defined around the target dot corresponding to the target dot latch circuitry $E_x$. That is, the area 1071A contains the latch circuitries EA0 to EA7. The area 1071B contains the latch circuitries EB0 to EB2. The area 1071C contains the latch circuitries EC0 to EC2. The area 1071D contains the latch circuitries ED0 to ED2.

A converter 1072 identifies the surrounding situation around the target dot by referring to the image data in each of the latch circuitries. The converter 1072 selects one of conversion tables $TT_1$ to $TT_3$ (see Figs. 17(a), 18(a) and 19(a)) stored in a storage 1090 under the later-described condition to level-convert the target dot image data $DX_E$ and outputs it as target dot image data $DX_E'$.

The conversion table $TT_1$ shown in Fig. 17(a) is used to convert a level of the target dot image data $DX_E$ latched in the target dot latch circuitry $E_x$ by a magnification corresponding to the conversion table code TC. Fig. 17 (b) shows a graph $GG_1$ obtained by graphing the conversion table $TT_1$.

The conversion table $TT_2$ shown in Fig. 18(a) is used to convert a level of the target dot image data $DX_E$ latched in the target dot latch circuitry $E_x$ by a magnification corresponding to the conversion table code TC. Fig. 18 (b) shows a graph $GG_2$ obtained by graphing the conversion table $TT_2$.

The conversion table $TT_3$ shown in Fig. 19(a) is used to convert a level of the target dot image data $DX_E$ latched in the target dot latch circuitry $E_x$ by a magnification corresponding to the conversion table code TC. Fig. 19 (b) shows a graph $GG_3$ obtained by graphing the conversion table $TT_3$.

The ODD processing section 1080 comprises a dummy latch circuitry ODM0, a latch circuitry OD0, a latch circuitry OD1, and a latch circuitry OD2 that are arranged corresponding to the 1-line buffer 1050, the 1-line buffer 1040, and the serial/parallel converter 1030 to latch the image data DP in synchronization with the synchronizing signal, respectively.

A latch circuitry OA0, a latch circuitry OA3, a latch circuitry OA5, and a latch circuitry OC0 are arranged corresponding to the dummy latch circuitry ODM0, the latch circuitry OD0, the latch circuitry OD1, and the latch circuitry OD2 to latch the output data from the dummy latch circuitry ODMO, the latch circuitry OD0, the latch circuitry OD1, and the latch circuitry OD2 in synchronization with the synchronizing signal, respectively.

A latch circuitry OA1, a target dot latch circuitry $O_x$, a latch circuitry OA6, and a latch circuitry OC1 are arranged corresponding to the latch circuitry OA0, the latch circuitry OA3, the latch circuitry OA5, and the latch circuitry OC0 to latch the output data from the latch circuitry OA0, the latch circuitry OA3, the latch circuitry OA5, and the latch circuitry OC0 in synchronization with the synchronizing signal, respectively.

A latch circuitry OA2, a latch circuitry OA4, a latch circuitry OA7, and a latch circuitry OC2 are arranged corresponding to the latch circuitry OA1, the target dot latch circuitry $O_x$, the latch circuitry OA6, and the latch circuitry OC1 to latch the output data from the latch circuitry OA1, the target dot latch circuitry $O_x$, the latch circuitry OA6, and the latch circuitry OC1 in synchronization with the synchronizing signal, respectively. The target dot latch circuitry $O_x$ holds target dot image data $DX_O$ associated with a target dot. A latch circuitry OB0, a latch circuitry OB1, a latch circuitry OB2, and a dummy latch circuitry ODM1 are arranged corresponding to the latch circuitry OA2, the latch circuitry OA4, the latch circuitry OA7, and the latch circuitry OC2 to latch the output data from the latch circuitry OA2, the latch circuitry OA4, the latch circuitry OA7, and the latch circuitry OC2, respectively.

Four areas in total including an area 1081A, an area 1081B, an area 1081C, and an area 1081D are defined around the target dot corresponding to the target dot latch circuitry $O_x$. The area 1081A contains the latch circuitries OA0 to OA7. The area 1081B contains the latch circuitries OB0 to OB2. The area 1081C contains the latch circuitries OC0 to OC2. The area 1081D contains the latch circuitries OD0 to OD2.

A converter 1072 identifies the surrounding situation around the target dot by referring to the image data in each of the latch circuitries, and selects one of the conversion tables $TT_1$ to $TT_3$ stored in the storage 1090 (see Figs. 17(a), 18(a), and 19(a)) under the later-described condition to level-convert the target dot image data $DX_O$ and outputs it as target dot image data $DX_O'$.

A LD (laser diode) modulator 1200a modulates a writing laser beam, in response to the target dot image data $DX_E'$ and the target dot image data $DX_O'$, with respect to the optical writing time period, optical power time period, and optical power in combination.

Fig. 16 is a schematic diagram that shows a positional relation between the EVEN processing section 1070 and the ODD processing section 1080 in the subscanning direction. In this figure, an EVEN dot reference area 1210 corresponds to the EVEN processing section 1070, and an ODD dot reference area 1220 corresponds to the ODD processing section 1080.

A target dot $1210_x$ corresponds to the target dot latch circuitry $E_x$ in the EVEN processing section 1070. A target dot $1220_x$ corresponds to the target dot latch circuitry $O_x$ in the ODD processing section 1080. In an actual case, the EVEN dot reference area 1210 and the ODD dot reference area 1220 overlap each other in the subscanning direction. However, the ODD dot reference area 1220 is depicted as shifted in the main scanning direction from the EVEN dot reference area 1210 for easy understanding.

The writing laser beam in Fig. 16 is designed to have the number of beams = 2. In the EVEN dot reference area 1210, the number of lines following the target dot $1210_x$ (the third line $L_3$ and the fourth line $L_4$ in the figure) is determined equal to the number of beams = 2 (or an integral multiple of 2). Similarly, also in the ODD dot reference area 1220, the number of lines following the target dot $1220_x$ (the second line $L_2$ and the third line $L_3$ in the figure) is determined equal to the number of beams = 2 (or an integral multiple of 2).

In combination of the EVEN dot reference area 1210 and the ODD dot reference area 1220, a pair of target dots can be converted every two lines in the subscanning direction. For example, a pair includes the target dot $1220_x$ on the first line $L_1$ and the target dot $1210_x$ on the second line $L_2$, and a pair includes the target dot $1220_x$ on the third line $L_3$ and the target dot $1210_x$ on the fourth line $L_4$. Therefore, it is possible to minimize the use of the 1-line buffers.

Operation of the fifth embodiment is explained next. At step SA1 shown in Fig. 20, the CPU 1012 (see Fig. 13) determines if any command is input from the personal computer 1000a. If the determined result indicates "No", the same determination is repeated. If a command is input, the CPU 1012 sets the determined result at step SA1 to "Yes".

At step SA2, the CPU 1012 analyzes the command. At step SA3, the CPU 1012 rasterizes image data from the personal computer 1000a to create bitmap data, and the bitmap data is then stored in the frame RAM 1015. At step SA4, the CPU 1012 determines if the command is a line command.

If the command is a line command, the CPU 1012 sets the determined result at step SA4 to "Yes". At step SA5, the CPU 1012 executes the dither processing to the bitmap data using the first thin-line dither threshold matrix 1300, the second thin-line dither threshold matrix 1310, and the third thin-line dither threshold matrix 1320 shown in Fig. 21.

If the command is an image command on the other hand, the CPU 1012 sets the determined result at step SA4 to "No". At step SA7, the CPU 1012 executes the dither processing to the bitmap data using the first image dither threshold matrix 1400, the second image dither threshold matrix 1410, and the third image dither threshold matrix 1420 shown in Fig. 22.

In the dither processing, the original image of the bitmap data has 49 halftones. Multivalue bitmap data is expressed with 2 bits, and includes a first level through a third level. For the halftone 0, all dots are set to 0. In the thin-line dither processing, for the halftones 1 and 2, all dots are set to the first level. For the halftones 3 to 25, the corresponding dots are set to the second level. For the halftones 26 to 48, the corresponding dots are set to the third level.

In the image dither processing on the other hand, a dot located at (2, 2) from the upper left is set to the first level for the halftone 1, the second level for the halftone 2, and the third level for the halftone 3. Similarly, a dot located at (4, 4) from the upper left is set to the first level for the halftone 4, the second level for the halftone 5, and the third

EP 1 330 112 A1

level for the halftones 6 to 48.

At step SA6, the dither-processed 2-bit image data DS is transferred to the printer engine 1020. Thus, the 2-line image data DS shown in Fig. 14 is converted into the parallel image data DP at the serial/parallel converter 1030 in synchronization with the synchronizing signal. The image data DP is stored in the 1-line buffer 1040, the 1-line buffer 1050, and the 1-line buffer 1060 in synchronization with the synchronizing signal. The image data DP is then latched as 5-line data in a latch circuitry on each first stage in the EVEN processing section 1070 and the ODD processing section 1080.

In the EVEN processing section 1070, the image data DP on the first line is latched at the latch circuitry ED1. The image data DP on the second line is latched at the latch circuitry ED2. The image data DP on the third line (the output data from the 1-line buffer 1040) is latched at the latch circuitry ED0. The image data DP on the fourth line (the output data from the 1-line buffer 1050) is latched at the dummy latch circuitry EDM0.

On the other hand, in the ODD processing section 1080, the image data DP on the first line is latched at the latch circuitry OD2. The image data DP on the third line (the output data from the 1-line buffer 1040) is latched at the latch circuitry OD1. The image data DP on the fourth line (the output data from the 1-line buffer 1050) is latched at the latch circuitry OD0. The image data DP on the fifth line (the output data from the 1-line buffer 1060) is latched at the dummy latch circuitry ODM0.

In the EVEN processing section 1070, respective pieces of the data latched in the latch circuitry ED1, the latch circuitry ED2, the latch circuitry ED0, and the dummy latch circuitry EDM0 are shifted in turn to the right in Fig. 14 in synchronization with the synchronizing signal. That is, the pieces of data are shifted from the latch circuitry EA5, the latch circuitry EC0, the latch circuitry EA3, and the latch circuitry EA0, through the latch circuitry EA6, the latch circuitry EC1, the target dot latch circuitry $E_x$, and the latch circuitry EA1, and also through the latch circuitry EA7, the latch circuitry EC2, the latch circuitry EA4, and the latch circuitry EA2, to the latch circuitry EB2, the dummy latch circuitry EDM1, the latch circuitry EB1, and the latch circuitry EB0, respectively.

In the ODD processing section 1080, on the other hand, respective pieces of the data delayed by one line from the EVEN processing section 1070 are shifted in turn to the right in Fig. 14 in synchronization with the synchronizing signal. That is, the pieces of the data latched in the latch circuitry OD1, the latch circuitry OD2, the latch circuitry OD0, and the dummy latch circuitry ODM0 are shifted from the latch circuitry OA5, the latch circuitry OC0, the latch circuitry OA3, and the latch circuitry OA0, through the latch circuitry OA6, the latch circuitry OC1, the target dot latch circuitry $O_x$, and the latch circuitry OA1, and also through the latch circuitry OA7, the latch circuitry OC2, the latch circuitry OA4, and the latch circuitry OA2, to the latch circuitry OB2, the dummy latch circuitry ODM1, the latch circuitry OB1, and the latch circuitry OB0, respectively.

In the series of shift operations in the EVEN processing section 1070, the output data from the latch circuitries present in the areas 1071A, 1071B, 1071C, and 1071D are fed into the converter 1072. The converter 1072 determines the surrounding situation around the target dot (such as the presence or absence of a dot) on an area-basis of an area 1071A to 1071D by referring to the image data in each of the latch circuitries other than the target dot latch circuitry $E_x$ based on the following <Condition A> or <Condition B>.

<Condition A> If the target dot image data $DX_E$ from the target dot latch circuitry $E_x$ is 0:

- Use the areas 1071A to 1071D.
- Determine the following state (1) or state (2) that indicates if a dot (except for the target dot) is present in the area 1071A.

    (1) Output data = 0 (space)
    (2) Output data = 1 to 3 (the presence of a dot)

- Determine the following <Case 1> and <Case 2>

<Case 1> Output data from the latch circuitry EA4 is not 0, output data from latch circuitries other than the latch circuitry EA4 in the area 1071A is 0, and all output data in the area 1071B is 0 (space).

<Case 2> Output data from the latch circuitry EA6 is not 0, output data from latch circuitries other than the latch circuitry EA6 in the area 1071A is 0, all output data in the area 1071C is 0 (space), and all output data in the area 1071D is 0 (space).

16

<Condition B> If the target dot image data $DX_E$ from the target dot latch circuitry $E_x$ is not 0:

- Use the area 1071A.
- Determine the following state (1), state (2), or state (3) that indicates if a dot (except for the target dot) is absent (output data = 0: SPACE), present (output data = 1 or 2: HALF), or present (output data = 3: FULL) in the area 1071A.

    (1) Output data = 0 (SPACE)
    (2) Output data = 1 or 2 (the presence of a half dot: HALF)
    (3) Output data = 3 (the presence of a full dot: FULL)

- Determine the following <Case 1> through <Case 3>

<Case 1> All output data (except for the target dot) in the area 1071A is 0 (space).
<Case 2> Output data in the area 1071A is not all 0 and contains a half dot corresponding to the output data = 1 or 2.
<Case 3> Output data in the area 1071A is not all 0 and contain a full dot corresponding to the output data = 3.
The converter 1072 selects a table for use in level conversion of the target dot image data $DX_E$ in <Case 1>, <Case 2>, and <Case 3> under <Condition A> and <Condition B>. Specifically, in <Case 1>, based on the conversion table $TT_1$ shown in Fig. 17(a), the converter 1072 level-converts (density-corrects) the target dot image data $DX_E$ into the target dot image data $DX_E'$ and outputs the data to the LD modulator 1200a.
In <Case 2>, based on the conversion table $TT_2$ shown in Fig. 18(a), the converter 1072 level-converts (density-corrects) the target dot image data $DX_E$ into the target dot image data $DX_E'$ and outputs the data to the LD modulator 1200a. In <Case 3>, based on the conversion table $TT_3$ shown in Fig. 19(a), the converter 1072 level-converts (density-corrects) the target dot image data $DX_E$ into the target dot image data $DX_E'$ and outputs the data to the LD modulator 1200a.
On the other hand, the converter 1082 of the ODD processing section 1080 also operates like the converter 1072. That is, the converter 1082 determines the surrounding situation around the target dot (such as the presence or absence of a dot) on an area-basis of the areas 1081A to 1081D by referring to the image data in each of the latch circuitries other than the target dot latch circuitry $O_x$ based on the following <Condition A> or <Condition B>.

<Condition A> If the target dot image data $DX_O$ from the target dot latch circuitry $O_x$ is 0:

- Use the areas 1081A to 1081D.
- Determine the following state (1) or state (2) that indicates if a dot (except for the target dot) is present in the area 1081A.

    (1) Output data = 0 (space)
    (2) Output data = 1 to 3 (the presence of a dot)

- Determine the following <Case 1> and <Case 2>

<Case 1> Output data from the latch circuitry OA4 is not 0, output data from latch circuitries other than the latch circuitry OA4 in the area 1081A is 0, and all output data in the area 1081B is 0 (space).
<Case 2> Output data from the latch circuitry OA6 is not 0, output data from latch circuitries other than the latch circuitry OA6 in the area 1081A is 0, all output data in the area 1081C is 0 (space), and all output data in the area 1081D is 0 (space).

<Condition B> If the target dot image data $DX_O$ from the target dot latch circuitry $O_x$ is not 0:

- Use the area 1081A.
- Determine the following state (1), state (2), or state (3) that indicates if a dot (except for the target dot) is absent (output data = 0: SPACE), present (output data = 1 or 2: HALF), or present (output data = 3: FULL) in the area 1081A.

(1) Output data = 0 (SPACE)
(2) Output data = 1 or 2 (the presence of a half dot: HALF)
(3) Output data = 3 (the presence of a full dot: FULL)

- • Determine the following <Case 1> through <Case 3>

<Case 1> All output data (except for the target dot) in the area 1081A is 0 (space).

<Case 2> Output data in the area 1081A is not all 0 and contains a half dot corresponding to the output data = 1 or 2.

<Case 3> Output data in the area 1081A is not all 0 and contains a full dot corresponding to the output data = 3.

It is explained in <Condition A> and <Condition B> that the output data is expressed with 2 bits while it may be expressed with 1 bit as well as 4 bits.

The converter 1082 selects a table for use in level conversion of the target dot image data $DX_O$ according to any of <Case 1> to <Case 3> under <Condition A> and <Condition B>. Specifically, in <Case 1>, based on the conversion table $TT_1$ shown in Fig. 17(a), the converter 1082 level-converts (density-corrects) the target dot image data $DX_O$ into the target dot image data $DX_O'$ and outputs the data to the LD modulator 1200a.

In <Case 2>, based on the conversion table $TT_2$ shown in Fig. 18(a), the converter 1082 level-converts (density-corrects) the target dot image data $DX_O$ into the target dot image data $DX_O'$ and outputs the data to the LD modulator 1200a. In <Case 3>, based on the conversion table $TT_3$ shown in Fig. 19(a), the converter 1082 level-converts (density-corrects) the target dot image data $DX_O$ into the target dot image data $DX_O'$ and outputs the data to the LD modulator 1200a.

The LD modulator 1200a modulates a writing laser beam, in response to the target dot image data $DX_E'$ and the target dot image data $DX_O'$, with respect to the optical writing time period, optical power time period, and optical power in combination. Thus, the density-corrected target dot image data $DX_E'$ and target dot image data $DX_O'$ are written into a recording medium.

According to the fifth embodiment as explained above, the target dot is subjected to level conversion based on the state of the peripheral dots in the adjacent area (the area 1071A and the like) and plural areas (the areas 1071B, 1071C and the like) with respect to the target dot. Therefore, it is possible to achieve optimal dot reproduction even for a high-resolution dot based on the surrounding situation.

According to the fifth embodiment, any of the conversion tables (conversion tables $TT_1$, $TT_2$, $TT_3$) is selected based on the level state of the peripheral dot in the adjacent area (the area 1071A and the like). Therefore, it is possible to achieve optimal dot reproduction corresponding to the halftone processing.

According to the fifth embodiment, the level conversion required for the case where the number of peripheral dots that are present is zero, is executed separately from the level conversion required for the case where the number is any other than zero. Therefore, it is possible to reduce a memory area required for management as compared to that for integrally managing both cases.

Sixth Embodiment:

A sixth embodiment is explained next. In Fig. 1, the photoreceptor 1 as the image carrier is composed of a flexible endless belt-like photoreceptor, is suspended around the rotating rollers 2 and 3 and conveyed clockwise in the figure. Those arranged around the photoreceptor 1 along the rotational direction thereof include the erasing lamp 21, the charger 4, the laser writing unit 5, the developing devices 6 to 9 of C, M, Y and K, the intermediate transfer belt 10, and the cleaning unit 15. The laser writing unit 5 is housed in a support cabinet having a slit-like aperture for exposure formed on the upper surface of the support cabinet to be incorporated in the device body. A laser optical system 5 may also include, other than the laser writing unit 5, an optical system integrally formed with a light emission section and a convergent optical transmission medium. The charger 4, the laser writing unit 5, and the cleaning unit 15 are arranged opposing one roller 2 of plural rollers that suspend the photoreceptor 1 around the rollers.

The developing devices 6 to 9 contain developers of, for example, yellow (Y), magenta (M), cyan (C), and black (BK), respectively. The developing devices 6 to 9 include development sleeves that are close to or in contact with the belt-like photoreceptor 1 at a certain position, and develop a latent image on the photoreceptor belt 1 by non-contact or contact development. The intermediate transfer belt 10 functions as a transferred image carrier. The intermediate transfer belt 10 is suspended around the rotating rollers 11 and 12, and is driven by the rotating rollers 11 and 12 so as to be conveyed counterclockwise.

The photoreceptor 1 and the intermediate transfer belt 10 contact with each other at the rotating roller 3. Thus, a first developed image on the photoreceptor 1 is transferred onto the intermediate transfer belt 10 via the bias roller 13 located inside the intermediate transfer belt 10. When similar processes are repeated, second though fourth developed images are superimposed on one another on the intermediate transfer belt 10 so that the images are transferred without any positional deviation. The transfer roller 14 is disposed so as to be in contact with and separate from the intermediate transfer belt 10. The cleaning unit 15 cleans the photoreceptor 1, and another cleaning unit 16 cleans the intermediate transfer belt 10. The cleaning unit 16 for the intermediate transfer belt 10 has a blade 16A kept at a position separated from the surface of the intermediate transfer belt 10 during image formation. The blade 16A is press-contacted with the surface of the intermediate transfer belt 10 as shown in Fig. 2 only during cleaning after the image formation to clean the intermediate transfer belt 10. The reference numeral 16B denotes a base of the blade 16A attached pivotably about a pivot.

The laser writing unit 5 comprises a not-shown laser diode (LD) unit, a polygon motor 5A, the polygon mirror 5B, the fθ lens 5C, and the reflective mirror 5D to emit a laser beam for forming a dot-like latent image on the photoreceptor 1. The laser writing unit 5 expresses a density gradation by a dot density or dot size with plural dots and 8 bits, and a dot phase (a right or left writing location).

A process of color image formation in the image formation device thus configured briefly is performed as follows.

In multi-color image formation, an image data processor operationally processes data obtained in a color image data input section in which an image pickup device scans an original draft, and once stores the data in an image memory. The image data stored in the image memory is then read out for recording and fed to the color image formation device (printer) as a recorder.

That is, a color image signal output from an image reader that is discretely disposed from the color image formation device is input to the laser writing unit 5. In the laser writing unit 5, the laser beam emitted from a semiconductor laser 5E is scanned by the polygon mirror 5B that is rotationally driven by the drive motor 5A. After passing through the fθ lens 5C, the optical path of the laser beam is bent at the mirror, and the laser beam is then exposed to the circumference of the photoreceptor 1 that is previously erased by the erasing lamp 21 and is charged uniformly by the charger 4, and an electrostatic latent image is formed on the photoreceptor 1. The image pattern to be exposed is one of monochromatic image patterns when a desired full-color image is decomposed into colors of Y, M, C and BK.

Electrostatic latent images formed for each color are developed by the developing devices of Y, M, C, and BK respectively of the rotary developing unit to be visualized. Monochromatic images visualized with different colors are formed in this case. The monochromatic images formed on the photoreceptor 1 are transferred onto the intermediate transfer belt 10 that rotates counterclockwise while coming into contact with the belt-like photoreceptor 1. The color images of Y, M, C, and BK are sequentially superimposed on one another on the intermediate transfer belt 10. The superimposed images of Y, M, C, and BK on the intermediate transfer belt 10 are transferred by the transfer roller 14 onto a transfer paper conveyed from the paper feed tray 17 by the paper feed roller 18 to the transfer portion by adjusting timing at the regist rollers 19. After completion of the transfer, the transfer paper is subjected to fixing at the fixing device 20 to form a full-color image on the transfer paper.

As shown in Fig. 2, the intermediate transfer belt 10 has the six marks 41A to 41F on the edge thereof. When the mark detecting sensor 40 senses an arbitrary mark, for example, the mark 41A, a color writing is started, and when it senses the mark 41A again after one rotation, a second color writing is started. At this point in time, the number of the marks is managed so as to prevent the marks 41B to 41 F from being used as write timings by masking the corresponding signals. At a location slightly upstream from the contact portion of the photoreceptor belt 1 with the intermediate transfer belt 10, a toner density detecting sensor 22 is disposed so as to detect an amount of toner on the photoreceptor belt 1.

Fig. 23 is a block diagram that shows a configuration of the image processor in the image formation device according to the sixth embodiment. In the figure, the image processor includes four 1-line buffers L1, L2, L3, and L4, 25 latches H0 to H15, N0 to N3, S0 to S3, and X, two arithmetic sections A (2301) and B (2302), a bit conversion table (memory) 2303 for converting 4-bit data from each latch into 8-bit data, a correction table (memory) 2304 for density correction, a presence/absence determination section 2305 that determines the presence or absence of predetermined data in the data from the latch, and a latch 2306 for holding the determined result from the presence/absence determination section 2305.

According to the configuration in Fig. 23, for example, dither-processed 4-bit image data is latched in the latch H11 and is also applied to the 1-line buffer L2 through the 1-line buffer L1. The output from the 1-line buffer L2 is supplied to the latch H2 and is also applied to the 1-line buffer L3 on the upper line. The output from the 1-line buffer L3 is supplied to the latch H0 and is also applied to the 1-line buffer L4 on the upper line. The output from the 1-line buffer L4 is supplied to the latch H6.

Respective pieces of image data latched in the latches H0, H2, H4 are shifted in synchronization with a synchronizing signal and latched at the latches S0, N3, S3, respectively. Similarly, respective pieces of the latched image data are shifted in synchronization with the synchronizing signal and latched at the latches (N0, x, N2), (S1, N1, S2), (H3, H5), respectively. The data in the latches S0, S1, S2, S3, N0, N1, N2, and N3 adjacent to a target pixel x are fed to the arithmetic. section A (2301), and the latched data of the target pixel x is fed to the arithmetic section B (2302). The arithmetic section B (2302) supplies a constant value to an address section in the correction table 2304 only when a latch signal output from the latch 2306 is "0", and also outputs a phase signal of mode "0". A correction coefficient processed at the arithmetic section A (2301) is fed by an 8-bit width to the address section in the correction table 2304 and is converted into 8-bit data in the correction table 2304 to be output. The LD unit performs laser beam writing based on the 8-bit data.

Thus, 4-bit image data, corresponding to the following 5 dots in the main scanning direction x 5 dots in the subscanning direction, can be latched in the $5 \times 5$ latches. The reference numeral for a latch is also used to denote a position and density of the corresponding dot in the following explanation.

H6, H7, H8, H9, H10
H0, S0, N0, S1, H1
H2, N3, x, N1, H3
H4, S3, N2, S2, H5
H11, H12, H13, H14, H15

Among the $5 \times 5$ dots, 16 dots H0 to H15 are located on the line where the central dot x exists and on the upper and lower lines thereof, and spaced each 2 dots back and forth from the central dot x. Four dots S0 to S3 are located at the upper left, upper right, lower left, and lower right positions diagonally spaced from the central dot x, respectively. Four dots N0 to N3 are located at the upper, right, lower, and left positions of the central dot x, respectively.

The bit conversion table 2303 for converting 4-bit data input from each of the latches into 8-bit data is connected to the arithmetic section A (2301). Before operation of the arithmetic section A (2301), the bit conversion table 2304 converts 4-bit data into 8-bit data. The latched data in the latches H0 to H5, S0 to S3, N1, and N3 are supplied to the presence/absence determination section 2305, and the determined results are latched in the latch 2306 on the next stage. The presence/absence determination section 2305 outputs "0" when all data in H0 to H5, S0 to S3, N1, and N3 are "0", and outputs "1" in other cases.

Fig. 24 shows the contents written in the bit conversion table 2303 shown in Fig. 23. As for the contents in the bit conversion table 2303, an 8-bit writing level is selected so that a solid patch density of 4-bit input data has a linear characteristic as shown in Fig. 26. Specifically, the contents of the table have relations as shown in Fig. 25.

When the latch data is input, the arithmetic section A (2301) operates as follows.

That is, based on 8-bit data s0, s1, s2, s3, n0, n1, n2, and n3 converted at the image memory corresponding to the 4-bit reference data, S0, S1, S2, S3, N0, N1, N2, and N3; a gain Gs, n0, n1, n2, n3 corresponding to s0, s1, s2, s3; and a gain Gn corresponding to

s0, n0, s1
n3, x, n1
s3, n2, s2, an output G as the correction coefficient is computed from:.

$$G = Gn\Sigma(nt - x) + Gs\Sigma(st - x) \tag{1}$$

where n, t = 0, 1, 2, 3, and is output to the correction table memory 2304.

Further, if H6 to H15 are all "0", a correction amount Gt is added to the correction coefficient G of the equation (1). Thus, the equation (1) yields:

$$G = Gt\{Gn\Sigma(nt - x) + Gs\Sigma(st - x)\} \tag{2}$$

In order to smoothen the gradation in accordance with the correction coefficient G as shown in Fig. 27, 256 operated results (conversion tables) for converting 4-bit data of the central dot x into 8-bit data are previously stored in the correction table 2304. Among these, one conversion table is selected based on the correction coefficient G from the arithmetic section A. The 4-bit data of the central dot x is converted into 8-bit data using the conversion table.

Write phases of a printer are explained next with reference to Fig. 9. Normally, a dot is written in a phase of Mode "1" (Left mode). In this case, the dot width grows from the center to the right. On the other hand, in a phase of Mode "0" (Right mode), the dot width grows from the center to the left. Therefore, the left and right dots are linked with each other, and thus the dot can be emphasized with natural touch.

According to the sixth embodiment as explained above, the function of detecting a dot density or dot size of the dot adjacent to the target dot and the function of detecting a dot density or dot size of a dot spaced at least one dot from the target dot are provided. A write level of the target dot is corrected based on the dot density or dot size of the dot spaced at least one dot. Therefore, it is possible to form an optimal dot based on the surrounding situation around the target dot and improve reproducibility of a highlight.

In addition, the control unit that shifts a writing position of the target dot to the left or right based on the surrounding situation around the target dot is provided so as to smoothen the density gradation associated with the dot density or dot size. Therefore, it is possible to form an optimal dot based on the surrounding situation around the target dot and improve reproducibility of a highlight.

Seventh Embodiment:

A seventh embodiment is explained next. In Fig. 1, the photoreceptor 1 as an image carrier is composed of a flexible endless belt-like photoreceptor, and is suspended around the rotating rollers 2 and 3 to be conveyed clockwise in the figure. Those arranged around the photoreceptor 1 along the rotational direction thereof include the erasing lamp 21, the charger 4, the laser writing unit 5, the developing devices 6 to 9 of C, M, Y and K, the intermediate transfer belt 10, and the cleaning unit 15.

The laser writing unit 5 is housed in a support cabinet having a slit-like aperture for exposure formed on the upper surface of the support cabinet to be incorporated in the device body. As the laser optical system 5, an optical system integrally formed with a light emission section and a convergent optical transmission medium may be used other than the laser optical system 5. The charger 4, the laser writing unit 5, and the cleaning unit 15 are arranged opposing one roller 2 of the plural rollers that suspend the photoreceptor 1 around the rollers.

The developing devices 6 to 9 contain developers of, for example, yellow (Y), magenta (M), cyan (C), and black (BK), respectively. The developing devices 6 to 9 include development sleeves that are close to or in contact with the belt-like photoreceptor 1 at a predetermined position, and develop a latent image on the photoreceptor belt 1 by non-contact or contact development. The intermediate transfer belt 10 functions as a transferred image carrier. The intermediate transfer belt 10 is suspended around the rotating rollers 11 and 12 and is conveyed counterclockwise when the rotating rollers 11, 12 are driven.

The photoreceptor 1 and the intermediate transfer belt 10 come into contact with each other at the rotating roller 3. Thus, a first developed image on the photoreceptor 1 is transferred onto the intermediate transfer belt 10 by the bias roller 13 disposed inside the intermediate transfer belt 10.

By repeating similar processes, second though fourth developed images are superimposed on one another on the intermediate transfer belt 10 so that the images are transferred without any positional deviation. The transfer roller 14 is located so as to come into contact with and separate from the intermediate transfer belt 10. The cleaning unit 15 cleans the photoreceptor 1, and another cleaning unit 16 (Fig. 2) cleans the intermediate transfer belt 10. The cleaning unit 16 for the intermediate transfer belt 10 has the blade 16A that is kept at a position separated from the surface of the intermediate transfer belt 10 during image formation and is kept at a position press-contacted with the surface of the intermediate transfer belt 10 as shown in Fig. 2 only during cleaning after the image formation to clean the intermediate transfer belt 10. The reference numeral 16B denotes the base of the blade 16A that is disposed pivotably about the pivot.

The laser writing unit 5 comprises the not-shown laser diode (LD) unit, the polygon motor 5A, the polygon mirror 5B, the fθ lens 5C, and the reflective mirror 5D to emit a laser beam for forming. a dot-like latent image on the photoreceptor 1. The laser writing unit 5 expresses a density gradation by a dot density or dot size with plural dots and 8 bits, and a dot phase (a right or left writing location).

The process of color image formation in the image formation device thus configured briefly is performed as follows.

In multi-color image formation, the color image data input section can obtain data when the image pickup device scans an original draft. The data is operationally processed in the image data processor to create image data to be stored once in an image memory. The image data stored in the image memory is then read out for recording and fed to the color image formation device (printer) as a recorder.

A color image signal is output from the image reader discretely disposed from the color image formation device. When the color image signal is input to the laser writing unit 5, the laser beam emitted from the not-shown semiconductor laser in the laser writing unit 5 is scanned by the polygon mirror 5B rotationally driven by the drive motor 5A. After passing through the fθ lens 5C, the optical path of the scanned laser beam is bent at the reflective mirror 5D, and then exposed to the circumference of the photoreceptor 1 that is erased by the erasing lamp 21 and is charged uniformly by the charger 4 in advance to form an electrostatic latent image thereon. The image pattern to be exposed is one of monochromatic image patterns when a desired full-color image is decomposed into colors of Y, M, C and BK.

Electrostatic latent images formed for different colors are developed at the developing devices of Y, M, C and BK of the rotary developing unit. Monochromatic images developed with different colors are formed in this case. The monochromatic images formed on the photoreceptor 1 are transferred onto the intermediate transfer belt 10 that rotates counterclockwise while coming into contact with the belt-like photoreceptor 1. The color images of Y, M, C and BK are sequentially superimposed on one another on the intermediate transfer belt 10. The color images of Y, M, C and BK superimposed on the intermediate transfer belt 10 are transferred, by the transfer roller 14, to a transfer paper conveyed from the paper feed tray 17 to the transfer portion by the paper feed roller 18 and adjusted for timing at the regist rollers 19. After completion of the transfer, the transfer paper is subjected to fixing at the fixing device 20 to form a full-color image on the transfer paper.

As shown in Fig. 2, the intermediate transfer belt 10 has the six marks 41A to 41 F on the edge thereof. When the mark detecting sensor 40 senses an arbitrary mark, for example, the mark 41A, a writing is started, and when it senses the mark 41A again after one rotation, a second color writing is started. In this case, the signals corresponding to the marks 41B to 41F are masked by managing the number of marks so as to prevent these marks from being used as write timings. At a location slightly upstream from the contact portion of the photoreceptor belt 1 with the intermediate transfer belt 10, the toner density detecting sensor 22 is disposed for detecting an amount of toner on the photoreceptor belt 1.

In Fig. 28, for example, dither-processed 4-bit image data is latched by the latch H4 and is also applied to the 1-line buffer L2 through the 1-line buffer L1. At this point in time, the image data for the upper line of the latch H2 is latched in the latch H2 through the 1-line buffer L1. The image data for the upper line of the latch H0 is latched in the latch H0 through the 1-line buffer L2. Respective pieces of the image data latched in the latches H0, H2, H4 are shifted in synchronization with a synchronizing signal and are latched in the latches S0, N3, H4, respectively. Similarly, they are shifted in synchronization with the synchronizing signal and latched in the latches (N0, x, N2), (S1, N1, S2), (H1, H3, H5), respectively.

Thus, 4-bit image data corresponding to the following 5 dots in the main scanning direction x 3 dots in the subscanning direction, can be latched in the 5 x 3 latches.

The reference numeral for a latch is also used to denote a position and density of the corresponding dot in the following explanation.

    H0, S0, N0, S1, H1
    H2, N3, x, N1, H3
    H4, S3, N2, S2, H5

Among the $5 \times 3$ dots, 6 dots H0 to H5 are spaced each 2 dots back and forth from the central dot x on the line where the central dot x exists and on the upper and lower lines thereof. Four dots S0 to S3 are located at the upper left, upper right, lower left and lower right positions diagonally spaced from the central dot x, respectively. Four dots N0 to N3 are located at the upper, right, lower and left positions of the central dot x, respectively.

Data on the following dot positions are applied to a dot situation determination section 3101. It is noted that data on a dot position marked with $\times\times$ indicates that the data is not supplied.

    H0, S0, $\times\times$, S1, H1
    H2, N3, $\times\times$, N1, H3
    H4, S3, $\times\times$, S2, H5

The dot situation determination section 3101 applies determined data = 0 to the arithmetic section B through a latch 3102 if all of 4-bit data (= 0 to 15) of the 12 dots H0 to H5, S0 to S3, N1, and N3 is "0", and applies the determined data = 1 thereto in other cases,. Data on the following dot positions is fed to the arithmetic section A.

    $\times\times$, S0, N0, S1, $\times\times$
    $\times\times$, N3, x; N1, $\times\times$
    $\times\times$, S3, N2, S2, $\times\times$

The arithmetic section A converts 4-bit data (= 0 to 15) of the dots S0 to S3, N0 to N3, x into 8-bit data (= 0 to 255) based on a bit conversion table 3103 like that as shown in Fig. 4 and Fig. 5. This conversion characteristic is just an example and is previously set so that linear output with respect to input is obtained based on the printer characteristic as shown in Fig. 26.

The 8-bit data is represented by s0 to s3, n0 to n3, and x. Then, using the 8-bit data s0 to s3, n0 to n3, and x, a gain Gs for 8-bit data s0 to s3, and a gain Gn for 8-bit data n0 to n3, an 8-bit correction coefficient G is computed and output to a correction table 3104:

$$G = Gn\sum(nt - x) + Gs\Sigma(st - x)$$

    where n, t = 0, 1, 2, 3.

The 4-bit data of the central dot x and the determined data from the dot situation determination section 3101 are fed to the arithmetic section B. The arithmetic section B outputs 4-bit data having a constant value to the correction table 3104 if the determined data = 0, that is, all of 4-bit data (= 0 to 15) of 12 dots H0 to H5, S0 to S3, N1, and N3 is "0". In addition, the arithmetic section B outputs a phase signal of Mode "0" (Right mode) to the laser writing unit 5 shown in Fig. 1. On the other hand, if the determined data = 1, the arithmetic section B outputs 4-bit data of the central dot x directly to the correction table 3104 and outputs a phase signal of Mode "1" (Left mode) to the laser writing unit 5.

The correction table 3104 previously stores 256 operated results (conversion tables) for converting 4-bit data of the central dot x into 8-bit data in order to smoothen the gradation in accordance with the correction coefficient G as shown in Fig. 27. One of the conversion tables is selected based on the correction coefficient G from the arithmetic section A. The 4-bit data of the central dot x is converted into 8-bit data using the conversion table. The correction table 3104 also stores a conversion table that has a characteristic for smoothening a density gradation by plural dots and a dot density or dot size if all the 4-bit data (=0 to 15) of dots H0 to H5, S0 to S3, N1, and N3 is "0".

Write phases for the printer are explained next with reference to Fig. 9. Normally, a dot is written in a phase of Mode "1" (Left mode). In this case, the dot width grows from the center to the right. On the other hand, in a phase of Mode "0" (Right mode), the dot width grows from the center to the left. Therefore, the left and right dots are linked with each other, and thus the dot can be emphasized with natural touch.

Eight Embodiment:

Fig. 29 is a block diagram that shows a system configuration of an image formation device according to an eighth embodiment. In the figure, image information in a command format such as line command or text command is sent from an external device such as a personal computer (PC) 3301 to a printer controller 3302 for the image formation device as a printer. When receiving the command, the printer controller 3302 converts the image information into a bit map format based on the command and sends image data on a line basis to a printer engine 3303. The printer engine 3303 blinks or modulates the laser diode (LD) based on the sent image data to form an actual image.

Fig. 30 is a block diagram that shows a brief configuration of the printer controller 3302 shown in Fig. 29. The printer controller 3302 in this embodiment comprises a PC I/F section 3401 that receives an image command sent from the personal computer 3301 to the printer controller 3302, a frame RAM 3402 for storing image data expanded from the command to bitmap data, a ROM 3403 for storing dither thresholds and so forth, a CPU 3404 that controls each section of the printer including the entire data processing, and an engine I/F 3405 for transferring finally processed data to the printer engine 3303.

The printer controller 3302 thus configured analyzes the image command sent from the personal computer 3301 to the printer controller 3302 as shown in the flowchart of Fig. 31 (step 501). Then, the printer controller 3302 rasterizes the image data based on the input command (step 502). If the input command is a line command, the printer controller 3302 executes line dither processing (steps 503, 504) and transfers the data to the printer engine 3303 (step 506). To the contrary, if the input command is not a line command, it executes image dither processing (step 505), and transfers the data to the printer engine 3303 (step 506).

Fig. 32 shows dither thresholds, in which Fig. 32(a) shows dither thresholds for thin lines and Fig. 32(b) shows dither thresholds for images. Therefore, this embodiment uses the dither thresholds of Fig. 32(a) at step 504 and the dither thresholds of Fig. 32(b) at step 505.

In the eighth embodiment, the original image has 49 halftones. One dot has a multilevel of 2 bits. Therefore, threshold levels of the halftone are set to be first level through third levels. For the halftone 0, all dots are "0". In the thin-line dither processing, for the halftones "1" and "2", all dots have the first level. For the halftones "3" through "25", only the corresponding dots have the second level. For the halftones "26" through "48", only the corresponding dots have the third level.

In the image dither processing, as shown in Fig. 32(b), a dot located at a position spaced 2 to the left and 2 to the lower from the upper left has the first level for the halftone "1". It has the second level for the halftone "2" and the third level for the halftone "3". Similarly, a dot located at a position spaced 4 to the left and 4 to the lower from the upper left has the first level for the halftone "4". It has the second level for the halftone "5" and the third level for the halftone "6". Similarly, all other dots have the third level for the halftones up to "48".

Fig. 33 is a block diagram that shows a brief configuration of the major part of the printer engine 3303. The printer engine 3303 includes first and second 1-line buffers L1 and L2, 8 latches H0 to H7, a latch x corresponding to a target pixel, a counter 3701 that receives the output data of the latches H0 to H7; a latch x for storing the data of the target pixel, and a correction table 3702 that receives the output data from the counter 3701 to correct the data of the target pixel from the latch x and outputs it as an LD write signal.

The 2-bit data from the printer controller 3302 is fed to the latch H5 and the first 1-line buffer L1 in synchronization with a synchronizing signal, not shown. In synchronization with the next synchronizing signal, the data of the latch H5 is fed to the latch H6, and the data of the first 1-line buffer L1 is fed to the latch H3 and the second 1-line buffer L2. Similarly, the data of H0, H3, H5 are fed to H1, x, H6, and the data of H1, x, H6 are fed to H2, H4, and H7, respectively. The values in the pixels H0 to H7 other than the target pixel x are supplied to the counter 3701 that counts the number of values close to "0" or the number of dots when the dots are present. The number of counts at the counter 3701 and the data of the target pixel x are input to the correction table 3702. The correction table 3702 converts the data of the target pixel x based on a previously stored table, for example, as shown in Fig. 34, in accordance with the output from the counter 3701, to output write data to LD.

As shown in Fig. 34, for writing to the LD, the data is modulated in 255 levels. In the table, if the counter data of the counter 3701 associated with 8 pixels adjacent to the target pixel x is "0" through "7", that is, a space pixel is present in the surrounding of the target pixel, the input data for the target pixel is converted into "85" in the first level, "170" in the second level, and "255" in the third level, respectively. To the contrary, if the counter data of the counter 3701 associated with the 8 pixels is 8, that is, there are pixels all around the target pixel, the data is converted into "30" in the first level, "80" in the second level, and "255" in the third level, respectively.

According to the seventh and eighth embodiments as explained above, if the target dot is a single dot at least in the main scanning direction and spaces of two dots are present back and forth in the main scanning direction, the writing level of the target dot is controlled to smoothen the density gradation by plural dots and a dot density or dot size. Therefore, it is possible to form an optimal dot based on the surrounding situation around the dot to improve reproducibility of a highlight.

In addition, if the target dot is a single dot at least in the main scanning direction and spaces of two dots are present back and forth in the main scanning direction, the writing position of the target dot is shifted to the right or left to smoothen the density gradation by plural dots. Therefore, it is possible to form an optimal dot based on the surrounding situation around the dot to improve reproducibility of a highlight.

If a command from an external device is related to line formation, the unit that carries out pseudo halftone processing is switched to processing of improving line reproducibility. Therefore, it is possible to achieve optimal line reproduction.

The unit that carries out pseudo halftone processing performs conversion with the level "1" that is at least the lowest level in multivalue levels unless the data is "0". Therefore, it is possible to achieve optimal line reproduction.

Peripheral data around the target dot is detected, and a writing value in multivalue levels is switched based on the detected data. Therefore, it is possible to form an optimal dot based on the surrounding situation around the dot to achieve optimal line reproduction.

The unit that carries out pseudo halftone processing switches between a distributed pseudo halftone processing for pseudo halftone processing for lines and a centralized pseudo halftone processing for those other than the line pseudo halftone processing. Therefore, it is possible to achieve optimal reproduction on line.

As explained above, according to the image formation device of the present invention, the data corresponding to the target dot is increased based on the result of detection by the peripheral dot detecting unit and the result of detection by the space dot detecting unit. Therefore, it is advantageously possible to achieve optimal dot reproduction based on the surrounding situation around the target dot and improve reproducibility of a highlight.

According to the image formation device of the invention, an arbitrary amount of additional data is added to the data corresponding to the target dot. Therefore, it is advantageously possible to achieve further optimal dot reproduction because the additional data can be varied.

According to the image formation device of the invention, the presence or absence of a peripheral dot located at a minimal distance from the target dot is detected and the data corresponding to the target. dot is increased based on the detected result. Therefore, it is advantageously possible to achieve optimal dot reproduction based on the surrounding situation around the target dot and improve reproducibility of a highlight.

According to the image formation device of the invention, the phase of the target dot is shifted based on empty states of the peripheral dots in the main and subscanning directions. Therefore, it is advantageously possible to achieve optimal dot reproduction in consideration of the empty states of the peripheral dots.

According to the image formation device of the invention, the phase of the target dot is shifted to the opposite side to the space dot. Therefore, it is advantageously possible to achieve further optimal dot reproduction because the target dot can be emphasized while remaining the space dot.

According to the image formation device of the invention, the target dot is subjected to level conversion based on the result of detection by the number-of-areas detecting unit. Therefore, it is advantageously possible to achieve optimal dot reproduction even for a high-resolution dot based on the surrounding situation around the target dot.

According to the image formation device of the invention, a detection area is spread in the main and subscanning directions. Therefore, it is advantageously possible to allow influence of the surrounding (wide range) over the target dot to be reflected to the data conversion of the target dot.

According to the image formation device of the invention, plural detection areas are distributed among areas each spreading in the main and subscanning directions. Therefore, it is advantageously possible to allow a degree of the influence of the peripheral dot over the target dot to be reflected to the data conversion of the target dot.

According to the image formation device of the invention, the conversion table is applied to switch the degree of the level conversion based on the detected result. Therefore, it is advantageously possible to perform optimal data conversion automatically.

According to the image formation device of the invention, the target dot is subjected to level conversion based on the result of detection by the detecting unit. Therefore, it is advantageously possible to achieve optimal dot reproduction even for a high-resolution dot based on the surrounding situation around the target dot.

According to the image formation device of the invention, the set of peripheral dots is designed to have the same resolution in the main and subscanning directions. Therefore, it is advantageously possible to achieve optimal dot reproduction in the main and subscanning directions based on the surrounding situation around the target dot.

According to the image formation device of the invention, the target dot is designed to have the same resolution in the main and subscanning directions. Therefore, it is advantageously possible to achieve optimal dot reproduction in the main and subscanning directions based on the surrounding situation around the target dot.

According to the image formation device of the invention, the target dot is subjected to level conversion based on the state of the peripheral dots in the adjacent area to the target dot and plural areas. Therefore, it is advantageously possible to achieve optimal dot reproduction even for a high-resolution dot based on the surrounding situation.

According to the image formation device of the invention, one of the level conversion tables is selected based on the level state of the peripheral dot in the adjacent area. Therefore, it is advantageously possible to achieve optimal dot reproduction corresponding to a halftone processing.

According to the image formation device of the invention, the level conversion when the number of the peripheral dots that are present is zero is executed separately from the level conversion for the number other than zero. Therefore, it is advantageously possible to reduce a memory area required for management as compared to that for integrally managing both cases.

According to the image formation device of the invention, an arbitrary dot is generated based on the result of detection by the detecting unit even if the target dot has a level of zero. Therefore, it is advantageously possible to improve dropout of a single dot and failure of reproducibility.

According to the image formation device of the invention, when the dot image is written into the medium with multiple beams, respective positions of the target dot in the subscanning direction corresponding to the beams are laid out on positions corresponding to an integral multiple of the number of the beams. Therefore, it is advantageously possible to minimize the use of line buffers because the target dot can be converted per plural lines.

INDUSTRIAL APPLICABILITY

As explained above, the image formation device according to the present invention is suitable for an image formation system applicable to a copier, a printer, a facsimile, and the like, that modulates light or ion flow based on image data to be applied to a recording -medium to form a dot image on the recording medium based on an electrophotographic method.

**Claims**

1. An image formation device that forms a dot image on a recording medium based on image data, comprising:

   a peripheral dot detecting unit that detects whether there is a peripheral dot located at an arbitrary distance from a target dot at least in a main scanning direction and in a subscanning direction in the dot image;
   a space dot detecting unit that detects whether space dots surround the target dot based on a result of detection by the peripheral dot detecting unit; and
   a data amount control unit that increases data corresponding to the target dot based on a result of detection by the space dot detecting unit.

2. The image formation device according to claim 1, wherein the data amount control unit adds an arbitrary amount of additional data to the data corresponding to the target dot.

3. The image formation device according to claim 1 or 2, wherein the peripheral dot detecting unit detects whether there is a peripheral dot located at a minimal distance from the target dot.

4. The image formation device according to claim 3, further comprising a phase control unit that shifts a phase of the target dot based on an empty state of the peripheral dot in the main scanning direction and an empty state of the peripheral dot in the subscanning direction.

5. The image formation device according to claim 1 or 2, further comprising:

   a both-adjacent-dots detecting unit that detects whether there are dots adjacent to both sides of the target dot at least in the main scanning direction; and
   if either of the dots is determined a space dot based on a result of detection by the both-adjacent-dots detecting unit, a phase control unit that shifts a phase of the target dot to an opposite side to the space dot when the target dot is to be formed on the recording medium.

6. An image formation device that forms a dot image on a recording medium based on image data, comprising:

   a number-of-areas detecting unit that detects a number of detection areas each in which presence of at least one peripheral dot is detected, among a plurality of detection areas around a target dot in the dot image, each of the plurality of detection areas containing a plurality of peripheral dots; and
   a converting unit that subjects the target dot to level conversion based on a result of detection by the number-of-areas detecting unit.

7. The image formation device according to claim 6, wherein one of the detection areas is an area spreading in a main scanning direction and a subscanning direction.

8. The image formation device according to claim 6, wherein the detection areas are distributed among areas each spreading in a main scanning direction and a subscanning direction.

9. The image formation device according to any one of claims 6 to 8, further comprising a storage unit that stores a conversion table indicating a correlation between the result of detection and degrees of the level conversion, wherein the converting unit switches between the degrees of the level conversion based on the result of detection by referring to the conversion table.

10. An image formation device that forms a dot image on a recording medium based on image data, comprising:

    a detecting unit that detects whether there is a set of peripheral dots in detection areas around a target dot in the dot image, each of the detection areas containing a plurality of peripheral dots as a set; and
    a converting unit that subjects the target dot to level conversion based on a result of detection by the detecting unit.

11. The image formation device according to claim 10, wherein the set of peripheral dots has the same resolution in a main scanning direction and a subscanning direction.

12. The image formation device according to claim 10, wherein the target dot includes a plurality of dots as a set and has the same resolution in a main scanning direction and a subscanning direction.

13. An image formation device that forms a dot image on a recording medium based on image data, comprising:

    a detecting unit that detects each state of peripheral dots in an adjacent area adjacent to a target dot and in a plurality of areas adjacent to the adjacent area in the dot image; and
    a converting unit that subjects the target dot to level conversion based on a result of detection by the detecting unit.

14. The image formation device according to claim 13, wherein the detecting unit detects a level state of the peripheral dot in the adjacent area, and the converting unit selects one of level conversion tables for level conversion based on the level state.

15. The image formation device according to claim 13, wherein the detecting unit detects a number of peripheral dots that are present in the adjacent area, and the converting unit executes separately at least a level conversion for the number that is zero from a level conversion for the number that is any other than zero.

16. The image formation device according to claim 13, wherein the converting unit generates an arbitrary dot based on a result of detection by the detecting unit even if the target dot has a level of zero.

17. The image formation device according to any one of claims 13 to 16, further comprising a layout unit, wherein when the dot image is to be written into the recording medium with multiple beams, the layout unit lays out positions of the target dot in a subscanning direction corresponding to the respective multiple beams on positions corresponding to an integral multiple of a number of the multiple beams.

FIG. 1

FIG. 2

# FIG.3

EP 1 330 112 A1

# FIG. 4

(a) MODE "0"

RIGHT MODE        (CENTER)        LEFT MODE

(b) MODE "1"

(CENTER)

MODE "0"        MODE "1"

(c)

SPACE DATA ←→ SINGLE DOT

(DOT BOUNDARY)

MODE "0"        MODE "1"

(d)

LEFT DOT ←→ RIGHT DOT

EP 1 330 112 A1

# FIG. 5

EP 1 330 112 A1

# FIG. 6

(CENTER)

RIGHT MODE                    LEFT MODE

(a)    MODE "0"

(b)    MODE "1"

(CENTER)

MODE "0"                    MODE "1"

(c)

SPACE  DATA          SINGLE DOT

EP 1 330 112 A1

# FIG. 7

EP 1 330 112 A1

# FIG. 8

(a)

$T_1$

| | CONVERSION TABLE CODE $CD_1$ (NUMBER OF AREAS) | | | | |
|---|---|---|---|---|---|
| $DX_1$ | 0 | 1 | 2 | 3 | 4 |
| 0 | 0 | 0 | 0 | 0 | 0 |
| 1 | 4 | 3 | 3 | 3 | 1 |
| 2 | 6 | 5 | 5 | 5 | 3 |
| 3 | 7 | 7 | 7 | 7 | 7 |

$DX_1'$

(b)

$DX_1'$ (OUTPUT)

$G_1$

—✕— CONVERSION TABLE CODE $CD_1$=0
—◯— CONVERSION TABLE CODE $CD_1$=1,2,3
—△— CONVERSION TABLE CODE $CD_1$=4

$DX_1$ (INPUT)

# FIG 9

(CENTER)

| | | RIGHT MODE | LEFT MODE |
|---|---|---|---|

(a)  MODE "0"

(b)  MODE "1"

EP 1 330 112 A1

# FIG.10

DOT BOUNDARY

MODE "1"  MODE "0"  MODE "1"

(a)

(b)  SPACE DOT  LEFT DOT  RIGHT DOT

EP 1 330 112 A1

EP 1 330 112 A1

# FIG.11

# FIG. 12

(a)

<br>

|  | DX$_2$ (INPUT) | | | |
|---|---|---|---|---|
| CONVERSION TABLE CODE CD$_2$ (NUMBER OF 1 DATA) | 0 | 1 | 2 | 3 |
| 0 | 0 | 4 | 5 | 7 |
| 1 | 0 | 3 | 5 | 7 |
| 2 | 0 | 2 | 4 | 7 |
| 3 | 0 | 2 | 4 | 7 |
| 4 | 0 | 2 | 4 | 7 |
| 5 | 0 | 2 | 4 | 7 |
| 6 | 0 | 2 | 4 | 7 |
| 7 | 0 | 2 | 4 | 7 |
| 8 | 0 | 1 | 3 | 7 |

T$_2$

DX$_2$'

(b)

DX$_2$' (OUTPUT)

G$_2$

DX$_2$ (INPUT)

—○— CD$_2$=0
—△— CD$_2$=1
—☐— CD$_2$=2~7
—··— CD$_2$=8

# FIG.13

PERSONAL COMPUTER 1000a

PRINTER CONTROLLER 1010

PERSONAL COMPUTER INTERFACE 1011

PRINTER ENGINE INTERFACE 1013

PRINTER ENGINE 1020

1016

CPU 1012

ROM 1014

FRAME RAM 1015

## FIG.14

EP 1 330 112 A1

# FIG.15

EP 1 330 112 A1

# FIG.16

MAIN SCANNING DIRECTION

SUBSCANNING DIRECTION

1220

ODD — 1220x

1210

EVEN — 1210x

| | 1ST LINE | $L_1$ |
| | 2ND LINE | $L_2$ |
| | 3RD LINE | $L_3$ |
| | 4TH LINE | $L_4$ |
| | 5TH LINE | $L_5$ |
| | 6TH LINE | $L_6$ |
| | 7TH LINE | $L_7$ |
| | 8TH LINE | $L_8$ |

# FIG.17

(a)

|  | DX$_E$(DX$_O$) <INPUT> | | | | |
|---|---|---|---|---|---|
| CONVERSION TABLE CODE TC | 0 | 1 | 2 | 3 | |
| 0 | 0 | 4 | 5 | 7 | DX$_E$'(DX$_O$') <OUTPUT> |

TT$_1$

(b)

DX$_E$(DX$_O$) <INPUT>

GG

DX$_E$'(DX$_O$') <OUTPUT>

—— TC=0

# FIG.18

(a)

| CONVERSION TABLE CODE TC | DX_E(DX_O) <INPUT> | | | |
|---|---|---|---|---|
| | 0 | 1 | 2 | 3 |
| 1 | 0 | 3 | 5 | 7 |
| 2 | 0 | 2 | 4 | 7 |
| 3 | 0 | 2 | 4 | 7 |
| 4 | 0 | 2 | 4 | 7 |
| 5 | 0 | 2 | 4 | 7 |
| 6 | 0 | 2 | 4 | 7 |
| 7 | 0 | 2 | 4 | 7 |
| 8 | 0 | 1 | 3 | 7 |

$TT_2$

(b)

DX_E(DX_O) <INPUT>

GG_2

DX_E'(DX_O') <OUTPUT>

——— TC=1
—·— TC=2~7
·········· TC=8

# FIG.19

(a)

| | DX$_E$(DX$_O$) <INPUT> | | | |
|---|---|---|---|---|
| CONVERSION TABLE CODE TC | 0 | 1 | 2 | 3 |
| 1 | 0 | 2 | 4 | 7 |
| 2 | 0 | 2 | 4 | 7 |
| 3 | 0 | 2 | 4 | 7 |
| 4 | 0 | 2 | 4 | 7 |
| 5 | 0 | 2 | 4 | 7 |
| 6 | 0 | 2 | 4 | 7 |
| 7 | 0 | 2 | 4 | 7 |
| 8 | 0 | 1 | 3 | 7 |

TT$_3$

(b)

DX$_E$(DX$_O$) <INPUT>

GG$_3$

DX$_E$'(DX$_O$')<OUTPUT>

————— TC=1~7
—·—·— TC=8

# FIG. 20

```
              ┌───────────┐
              │   START   │
              └─────┬─────┘
                    ↓
              ╱───────────╲  SA1
         ┌──<  COMMAND INPUT?  >── No
         │    ╲───────────╱
         │         │ Yes
         │         ↓
         │    ┌──────────────────┐ SA2
         │    │ ANALYZE COMMAND  │
         │    └────────┬─────────┘
         │             ↓
         │    ┌──────────────────┐ SA3
         │    │    RASTERIZE     │
         │    └────────┬─────────┘
         │             ↓
         │       ╱───────────╲  SA4
         │      <  LINE COMMAND? >── No ──┐
         │       ╲───────────╱           │
         │         │ Yes                 ↓
         │    ┌──────────────────┐ SA5  ┌──────────────────┐ SA7
         │    │ EXCUTE LINE DITHER│     │ EXCUTE IMAGE DITHER│
         │    │ PROCESSING       │     │ PROCESSING        │
         │    └────────┬─────────┘     └─────────┬─────────┘
         │             ↓←──────────────────────────┘
         │    ┌──────────────────┐ SA6
         │    │ TRANSFER DATA TO │
         │    │ PRINTER ENGINE   │
         │    └────────┬─────────┘
         └─────────────┘
```

# FIG. 21

| 1 | 1 | 1 | 1 |
|---|---|---|---|
| 1 | 1 | 1 | 1 |
| 1 | 1 | 1 | 1 |
| 1 | 1 | 1 | 1 |

1300

| 19 | 8.5 | 11.5 | 16 |
|---|---|---|---|
| 20.5 | 2.5 | 5.5 | 23.5 |
| 13 | 14.5 | 17.5 | 10 |
| 7 | 25 | 22 | 4 |

1310

| 42 | 31.5 | 34.5 | 39 |
|---|---|---|---|
| 43.5 | 25.5 | 28.5 | 46.5 |
| 36 | 37.5 | 40.5 | 33 |
| 30 | 48 | 45 | 27 |

1320

# FIG.22

| 34 | 13 | 19 | 28 |
|----|----|----|----|
| 37 | 1  | 7  | 43 |
| 22 | 25 | 31 | 16 |
| 10 | 46 | 40 | 4  |

~1400

| 35 | 14 | 20 | 29 |
|----|----|----|----|
| 38 | 2  | 8  | 44 |
| 23 | 26 | 32 | 17 |
| 11 | 47 | 41 | 5  |

~1410

| 36 | 15 | 21 | 30 |
|----|----|----|----|
| 39 | 3  | 9  | 45 |
| 24 | 27 | 33 | 18 |
| 12 | 48 | 42 | 6  |

~1420

# FIG.23

# FIG. 24

OUTPUT

255

0                                             15

INPUT

# FIG. 25

| INPUT | OUTPUT |
|---|---|
| 0 | 0 |
| 1 | 77 |
| 2 | 78 |
| 3 | 81 |
| 4 | 83 |
| 5 | 87 |
| 6 | 92 |
| 7 | 98 |
| 8 | 105 |
| 9 | 114 |
| 10 | 126 |
| 11 | 142 |
| 12 | 161 |
| 13 | 185 |
| 14 | 216 |
| 15 | 255 |

# FIG.26

DENSITY

0            15

INPUT

# FIG.27

OUTPUT

255

SELECTION BY
CORRECTION
COEFFICIENT

0            15

# FIG.28

DOT SITUATION DETERMINATION SECTION

EP 1 330 112 A1

# FIG.29

PC — 3301

CONTROLLER — 3302

ENGINE — 3303

# FIG.30

CPU — 3404

ROM — 3403

PC I/F — 3401

FRAME RAM — 3402

ENGINE I/F — 3405

# FIG.31

```
┌─────────────────────┐
│ ANALYZE COMMAND     │──501
└─────────────────────┘
           │
           ▼
┌─────────────────────┐
│     RASTERIZE       │──502
└─────────────────────┘
           │
           ▼
         ╱503
        ╱      ╲              No
       ╱ LINE    ╲ ──────────────────────┐
       ╲ COMMAND? ╱                        │
        ╲        ╱                         │
         ╲      ╱                          │
           │ Yes                           │
           │    504                        │    505
           ▼                               ▼
┌─────────────────────┐        ┌─────────────────────┐
│ EXECUTE LINE        │        │ EXECUTE IMAGE       │
│ DITHER PROCESSING   │        │ DITHER PROCESSING   │
└─────────────────────┘        └─────────────────────┘
           │                              │
           ▼◄─────────────────────────────┘
┌─────────────────────┐
│ TRANSFER DATA       │
│ TO ENGINE           │──506
└─────────────────────┘
```

# FIG.32

(a) THIN-LINE DITHER THRESHOLDS   (b)  IMAGE DITHER THRESHOLDS

FIRST THRESHOLD

| 1 | 1 | 1 | 1 |
|---|---|---|---|
| 1 | 1 | 1 | 1 |
| 1 | 1 | 1 | 1 |
| 1 | 1 | 1 | 1 |

FIRST THRESHOLD

| 34 | 13 | 19 | 28 |
|----|----|----|----|
| 37 | 1  | 7  | 43 |
| 22 | 25 | 31 | 16 |
| 10 | 46 | 40 | 4  |

SECOND THRESHOLD

| 19 | 9  | 12 | 16 |
|----|----|----|----|
| 21 | 3  | 6  | 24 |
| 13 | 15 | 18 | 10 |
| 7  | 25 | 22 | 4  |

SECOND THRESHOLD

| 35 | 14 | 20 | 29 |
|----|----|----|----|
| 38 | 2  | 8  | 44 |
| 23 | 26 | 32 | 17 |
| 11 | 47 | 41 | 5  |

THIRD THRESHOLD

| 42 | 32 | 35 | 39 |
|----|----|----|----|
| 44 | 26 | 29 | 47 |
| 36 | 38 | 41 | 33 |
| 30 | 48 | 45 | 27 |

THIRD THRESHOLD

| 36 | 15 | 21 | 30 |
|----|----|----|----|
| 39 | 3  | 9  | 45 |
| 24 | 27 | 33 | 18 |
| 12 | 48 | 42 | 6  |

FIG.33

# FIG. 34

| INPUT DATA | LD WRITE VALUE | |
|:---:|:---:|:---:|
| | 0~7 | 8 |
| 1 | 85 | 30 |
| 2 | 170 | 80 |
| 3 | 255 | 255 |

## INTERNATIONAL SEARCH REPORT

| International application No. |
| --- |
| PCT/JP01/07544 |

### A. CLASSIFICATION OF SUBJECT MATTER
Int.Cl⁷ H04N1/405, H04N1/23, B41J3/00

According to International Patent Classification (IPC) or to both national classification and IPC

### B. FIELDS SEARCHED

Minimum documentation searched (classification system followed by classification symbols)
Int.Cl⁷ H04N1/23-1/31, H04N1/40-1/409, H04N1/46, H04N1/60

Documentation searched other than minimum documentation to the extent that such documents are included in the fields searched

| Jitsuyo Shinan Koho | 1922-1996 | Toroku Jitsuyo Shinan Koho | 1994-2001 |
| Kokai Jitsuyo Shinan Koho | 1971-2001 | Jitsuyo Shinan Toroku Koho | 1996-2001 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | WO 89/05999 A1 (Matsushita Electric Ind. Co., Ltd.), | 1-3,6-8, |
|   | 29 June, 1989 (29.06.89), | 10-13,15-17 |
| Y | Full text; all drawings | 4,5,9,14 |
|   | & EP 352334 A1 & US 5023632 A |   |
|   | & US 5162820 A & JP 2568713 B2 |   |
|   |   |   |
| X | JP 4-185360 A (Canon Inc.), | 1-3,6-8, |
|   | 02 July, 1992 (02.07.92), | 10-13,15,16 |
| Y | Full text; all drawings (Family: none) | 4,5,9,14 |
|   |   |   |
| X | JP 7-307868 A (NEC Corporation), | 1-3,6-8, |
|   | 21 November, 1995 (21.11.95), | 10-13,15,16 |
| Y | Full text; all drawings (Family: none) | 4,5,9,14 |
|   |   |   |
| X | JP 61-199374 A (Ricoh Company, Ltd.), | 1-3 |
| Y | 03 September, 1986 (03.09.86), | 4,5 |
|   | Full text; all drawings |   |
|   | & US 4700201 A |   |
|   |   |   |
| X | JP 4-97374 A (Canon Inc.), | 1-3 |
| Y | 30 March, 1992 (30.03.92), | 4,5 |
|   | Full text; all drawings |   |

☒ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 11 December, 2001 (11.12.01) | 25 December, 2001 (25.12.01) |

| Name and mailing address of the ISA/ | Authorized officer |
| --- | --- |
| Japanese Patent Office | |
| Facsimile No. | Telephone No. |

Form PCT/ISA/210 (second sheet) (July 1992)

## INTERNATIONAL SEARCH REPORT

International application No.

PCT/JP01/07544

C (Continuation).   DOCUMENTS CONSIDERED TO BE RELEVANT

| Category* | Citation of document, with indication, where appropriate, of the relevant passages | Relevant to claim No. |
|---|---|---|
| | & US 5412408 A | |
| X<br>Y | JP 4-113861 A (Oki Electric Industry Co., Ltd.),<br>15 April, 1992 (15.04.92),<br>Full text; all drawings   (Family: none) | 1-3<br>4,5 |
| X<br>Y | JP 58-100161 A (Konishiroku Photo Ind. Co., Ltd.),<br>14 June, 1983 (14.06.83),<br>Full text; all drawings   (Family: none) | 1-3<br>4,5 |
| Y | JP 4-273661 A (Ricoh Company, Ltd.),<br>29 September, 1992 (29.09.92),<br>Full text; all drawings   (Family: none) | 4,5,9,14 |
| Y | JP 4-348660 A (Ricoh Company, Ltd.),<br>03 December, 1992 (03.12.92),<br>Full text; all drawings   (Family: none) | 4,5,9,14 |
| Y | JP 3-171874 A (Toshiba Corporation),<br>25 July, 1991 (25.07.91),<br>Full text; all drawings   (Family: none) | 4,5,9,14 |
| Y | JP 61-262366 A (Matsushita Electric Ind. Co., Ltd.),<br>20 November, 1986 (20.11.86),<br>Full text; all drawings   (Family: none) | 4,5 |

Form PCT/ISA/210 (continuation of second sheet) (July 1992)